# EUROPÄISCHE PATENTANMELDUNG

(11) **EP 4 030 216 A1**
(43) Veröffentlichungstag der Anmeldung: **20.07.2022**
(21) Anmeldenummer: 21151605.9
(22) Anmeldetag: 14.01.2021
(51) Int. Cl.: G02B 21/34, B01L 3/00

(54) **PROBENKAMMER ZUM MIKROSKOPIEREN VON ZELLEN UND SYSTEM MIT EINEM PROBENHALTER UND EINER PROBENKAMMER**

(71) Anmelder: ibidi GmbH, 82166 Gräfelfing (DE)
(72) Erfinder: Zantl, Roman, 82166 Gräfelfing (DE)
(74) Vertreter: Grünecker Patent- und Rechtsanwälte PartG mbB

(57) **Zusammenfassung**

Die Erfindung betrifft eine Probenkammer zum Mikroskopieren von Zellen, umfassend eine Deckplatte, deren Unterseite eine Auflagefläche aufweist. In der Deckplatte kann ein Reservoir für die Zellen mit einem Reservoirboden ausgebildet sein und die Unterseite der Deckplatte kann eine Reservoirbodenfläche aufweisen, die gegenüber der Auflagefläche nach unten versetzt angeordnet ist. Alternativ kann die Probenkammer eine Bodenplatte umfassen und die Unterseite der Deckplatte kann eine Befestigungsfläche aufweisen, die gegenüber der Auflagefläche nach unten versetzt angeordnet ist und an der die Bodenplatte befestigt ist, wobei die Deckplatte und die Bodenplatte derart ausgebildet und angeordnet sind, dass sie zusammen ein Reservoir für die Zellen mit einem Reservoirboden ausbilden, wobei die Bodenplatte den Reservoirboden bildet. Die Erfindung betrifft auch ein System mit einem Probenhalter und einer Probenkammer.

## Beschreibung

Die Erfindung betrifft eine Probenkammer zum Mikroskopieren von Zellen, umfassend eine Deckplatte, wobei in der Deckplatte ein Reservoir für die Zellen ausgebildet ist, oder zusätzlich zur Deckplatte eine Bodenplatte umfassend, die an der Unterseite der Deckplatte befestigt ist, wobei die Deckplatte und die Bodenplatte derart ausgebildet und angeordnet sind, dass sie zusammen ein Reservoir für die Zellen ausbilden, wobei die Bodenplatte den Reservoirboden bildet.

Derartige Probenkammern werden zum Mikroskopieren mittels inverser Mikroskopie verwendet, bei der das Objektiv von unten auf die Probenkammer gerichtet wird. Die Untersuchung erfolgt dann durch den Reservoirboden, insbesondere durch die Bodenplatte bzw. den Bereich der Deckplatte oberhalb einer Reservoirbodenfläche, hindurch. Die Bodenplatte der Probenkammer kann beispielsweise ein Deckglasboden sein.

Inverse Mikroskopiesysteme umfassen typischerweise einen Probenhalter, auf dem die Probenkammer während des Mikroskopierens aufliegt. Ein solcher Probenhalter weist eine Auflageplatte und eine Mikroskopieöffnung in der Auflageplatte auf. Beim Mikroskopieren liegt ein Teil der Probenkammer, typischerweise der äußere Rand der Probenkammer, auf der Auflageplatte auf. Der oberhalb der Mikroskopieöffnung angeordnete Bereich ist der zu mikroskopierende Bereich der Probenkammer. Dort befindet sich das Reservoir mit den Zellen. So können durch die Mikroskopieöffnung hindurch von unten die Zellen in dem Reservoir untersucht werden.

In vielen Fällen steht die Probenkammer dabei mit der Bodenplatte, also beispielsweise dem Deckglasboden, bzw. mit der Reservoirbodenfläche auf dem Probenhalter. In anderen Fällen ist die Bodenplatte bzw. die Reservoirbodenfläche im Vergleich zur Auflagefläche der Deckplatte nach oben versetzt angeordnet, so dass die Probenkammer nicht mit der Bodenplatte bzw. der Reservoirbodenfläche auf dem Probenhalter steht.

Grundsätzlich ist es beim Mikroskopieren der Zellkulturen vorteilhaft, das Objektiv, insbesondere dessen Frontlinse, möglichst nah an den Boden der Probenkammer bewegen zu können. Allerdings besteht die Gefahr, dass das Objektiv an der Begrenzung der Mikroskopieöffnung anstößt, wenn es zumindest teilweise in die Mikroskopieöffnung hineinragt und dann seitlich verfahren wird. Außerdem stellt die seitliche Begrenzung der Mikroskopieöffnung eine Limitierung hinsichtlich der Fläche dar, die mit hoher Qualität abgebildet werden kann, weil die Frontlinse nicht bis ganz an den Rand des zu untersuchenden Bereichs der Probenkammer mit entsprechend geringem Abstand verfahren werden kann. Somit haben alle bekannten Systeme das Problem, dass die mikroskopierbare Fläche durch die systeminhärente Geometrie unter Berücksichtigung von Sicherheitserwägungen begrenzt ist.

Eine Aufgabe der Erfindung ist es, eine Probenkammer und ein System, das eine Probenkammer und einen Probenhalter umfasst, bereitzustellen, die jeweils ermöglichen, zugleich hohe mikroskopierbare Fläche und Sicherheit bereitzustellen.

Die Erfindung stellt eine Probenkammer zum Mikroskopieren von Zellen bereit. Die Probenkammer umfasst eine Deckplatte, deren Unterseite eine Auflagefläche aufweist.

In der Deckplatte kann ein Reservoir für die Zellen mit einem Reservoirboden ausgebildet sein und die Unterseite der Deckplatte kann eine Reservoirbodenfläche aufweisen, die gegenüber der Auflagefläche nach unten versetzt angeordnet ist. Die Probenkammer kann insbesondere einteilig ausgebildet sein. Die Reservoirbodenfläche ist dabei eine Fläche der Unterseite des Teils der Deckplatte, der den Reservoirboden bildet. Mit anderen Worten ist die Reservoirbodenfläche eine Fläche der Unterseite der Deckplatte, die unterhalb des Reservoirs angeordnet ist.

Alternativ kann die Probenkammer eine Bodenplatte umfassen, wobei die Deckplatte und die Bodenplatte derart ausgebildet und angeordnet sind, dass sie zusammen ein Reservoir für die Zellen mit einem Reservoirboden bilden, wobei die Bodenplatte den Reservoirboden bildet, und wobei die Unterseite der Deckplatte eine Befestigungsfläche aufweist, die gegenüber der Auflagefläche nach unten versetzt angeordnet ist und an der die Bodenplatte befestigt ist. Die Probenkammer ist also mehrteilig ausgebildet.

Der Versatz der Befestigungsfläche bzw. der Reservoirbodenfläche gegenüber der Auflagefläche führt in beiden Fällen dazu, dass die Unterseite der Bodenplatte bzw. die Reservoirbodenfläche im bestimmungsgemäßen Gebrauch der Probenkammer, bei dem die Probenkammer auf einem Probenhalter, insbesondere auf einer Auflageplatte des Probenhalters mit einer Mikroskopieöffnung, aufliegt, im Vergleich zu den bekannten Probenkammern weiter unten angeordnet ist, so dass das Objektiv näher an die Bodenplatte bzw. die Reservoirbodenfläche heran bewegt und ein größerer Bereich der Probenkammer abgebildet werden kann, somit also die mikroskopierbare Fläche erhöht wird, ohne das Risiko, dass das Objektiv beschädigt wird, zu erhöhen.

Somit löst die erfindungsgemäße Probenkammer die oben genannte Aufgabe.

Die Oberseite der Probenkammer, der Deckplatte und der Bodenplatte ist jeweils die Seite, die im bestimmungsgemäßen Gebrauch, also wenn die Probenkammer bestimmungsgemäß auf dem Probenhalter aufliegt, nach oben weist. Die Unterseite der Probenkammer, Deckplatte und Bodenplatte ist jeweils die Seite, die im bestimmungsgemäßen Gebrauch, also wenn die Probenkammer bestimmungsgemäß auf dem Probenhalter aufliegt, nach unten weist. Die Begriffe "nach oben versetzt", "nach unten versetzt", "oberhalb" und "unterhalb" beziehen sich ebenfalls immer auf die Anordnung im bestimmungsgemäßen Gebrauch.

In der Alternative, in der die an der Deckplatte befestigte Bodenplatte den Reservoirboden bildet, kann die Deckplatte derart ausgebildet sein, dass ihre Unterseite eine Öffnung aufweist, und die Bodenplatte kann dann derart an der Deckplatte befestigt sein, dass sie die Öffnung verschließt und unterhalb der Öffnung den Boden der Probenkammer bildet. Die Befestigungsfläche kann direkt an die Öffnung angrenzen.

Deckplatte und Bodenplatte können zusammen ein oder mehrere Reservoire ausbilden, die durch Wände, die beispielsweise in der Deckplatte ausgebildet sein können, getrennt sind.

Alternativ können in der Deckplatte ein oder mehrere Reservoire, die durch Wände, die beispielsweise in der Deckplatte ausgebildet sein können, getrennt sind, ausgebildet sein. Die Deckplatte kann also zumindest die seitliche Begrenzung des bzw. der Reservoire und den Boden des bzw. der Reservoire bilden. Mit anderen Worten kann die Deckplatte also das bzw. die Reservoire seitlich und nach unten begrenzen. Die Deckplatte kann insbesondere den gesamten Boden der Probenkammer bilden. Die Deckplatte kann nach unten hin insbesondere vollständig geschlossen sein. Im Falle mehrere Reservoire kann die Deckplatte überall dort, wo sie den Boden der Reservoire bildet, insbesondere im gesamten Bereich der Reservoirbodenfläche, gleich dick sein.

Der Abstand um den die Befestigungsfläche gegenüber der Auflagefläche nach unten versetzt ist, kann zwischen 0,2 mm und 5 mm, insbesondere zwischen 0,2 mm und 1,5 mm, insbesondere zwischen 0,2 mm und 1 mm, insbesondere zwischen 0,2 mm und 0,5 mm betragen. Im Falle einer oben erwähnten und unten im Detail beschriebenen Stufenstruktur wird dieser Abstand auch als Stufenhöhe der Stufenstruktur bezeichnet.

Die Auflagefläche und/oder die Befestigungsfläche der Probenkammer können eben und insbesondere parallel zueinander ausgebildet sein. In bestimmungsgemäßer Anwendung können die Auflagefläche und/oder die Befestigungsfläche horizontal angeordnet sein.

Die Auflagefläche und/oder die Reservoirbodenfläche der Probenkammer können eben und insbesondere parallel zueinander ausgebildet sein. In bestimmungsgemäßer Anwendung können die Auflagefläche und/oder die Befestigungsfläche horizontal angeordnet sein. Die Deckplatte kann aus Kunststoff, insbesondere in Form eines Spritzgussteils ausgebildet sein.

Die Bodenplatte kann in Form eines Deckglasbodens ausgebildet sein. Die Bodenplatte kann mehrteilig ausgebildet sein, wobei jedes Teil der Bodenplatte jeweils ein oder mehrere Reservoire nach unten begrenzen kann. Die Teile der Bodenplatte sind alle gleich dick und an einer Teilfläche der Befestigungsfläche befestigt.

Die Bodenplatte bzw. die Deckplatte im Bereich der Reservoirbodenfläche kann zumindest teilweise, insbesondere im zu mikroskopierenden Bereich, parallel zu der Auflagefläche der Probenkammer sein. Im bestimmungsgemäßen Gebrauch kann dabei die Auflagefläche horizontal angeordnet sein.

Die Bodenplatte bzw. die Deckplatte im Bereich der Reservoirbodenfläche kann aus Kunststoff, beispielsweise COC, COP, PMMA, PS, PC, oder aus Glas, beispielsweise aus Borsilikat, SiO₂, ausgebildet sein.

Die Probenkammer kann für die Einmalverwendung ausgebildet sein. Es kann sich also um ein Verbrauchsprodukt handeln.

Die Probenkammer kann in Form einer, insbesondere mehrteiligen, Petrischale, oder eines Trägers im Objektträgerformat mit Aufbauten oder in Form einer, insbesondere mehrteiligen, Multitierplatte ausgebildet sein.

Die Probenkammer kann eine Petrischale umfassen, wobei die Bodenplatte beispielsweise als Deckglasboden ausgebildet sein kann, wobei hier insbesondere die Deckplatte in Form eines Spritzgussteils ausgebildet sein kann, an dessen Unterseite eine Bodenplatte in Form eines Deckglasbodens befestigt ist. Alternativ kann die Deckplatte die gesamte Petrischale einschließlich den Boden der Petrischale bilden, die Probenkammer kann also als einteilige Petrischale ausgebildet sein.

Die Probenkammer kann in Form eines Mikroskopieträgers mit einem oder mehreren Reservoiren, beispielsweise Töpfchen und/oder Kanälen ausgebildet sein, die entweder seitlich und unten durch die Deckplatte begrenzt sind oder die seitlich durch die Deckplatte und unten durch eine ein- oder mehrteilige Bodenplatte, beispielsweise einen Deckglasboden, die an der Unterseite der Deckplatte befestigt ist, begrenzt sind. Wenn eine mehrteilige Bodenplatte vorgesehen ist, deckt jeder Teil der Bodenplatte nur manche der Reservoire ab, mit anderen Worten, nicht alle Reservoire. Die Deckplatte wird in diesem Zusammenhang auch als Trägerplatte bezeichnet.

Wenn die Probenkammer in Form eines Mikroskopieträgers ausgebildet ist, kann die Deckplatte eine Breite und eine Länge, insbesondere auch eine Dicke, gemäß den Werten der Norm DIN ISO 8037-1 für Objektträger, aufweisen. Alternativ können Breite und/oder Länge und/oder Breite auch unter den Werten dieser DIN-Norm liegen, insbesondere jeweils um bis zu 10 %, insbesondere bis zu 5 %, insbesondere bis zu 2 %. Beispielsweise kann die Länge kleiner oder gleich 76 mm und die Breite kleiner oder gleich 26 mm sein. Die maximale Dicke kann zwischen 1 mm und 5 mm, insbesondere 1 mm und 1,5 mm sein.

Alternativ können die Dimensionen der Probenkammer, insbesondere der Deckplatte, dem ANSI-Standard der Society for Biomolecular Screening (SBS) für Multititerplatten entsprechen. Bei Multititerplattern deckt in der Regel eine gemeinsame Bodenplatte alle Reservoire ab.

Die Auflagefläche kann zwischen der Befestigungsfläche bzw. der Reservoirbodenfläche und der äußeren Kante bzw. den äußeren Kanten der Unterseite der Deckplatte angeordnet sein. Alternativ kann die Auflagefläche zwischen der Reservoirbodenfläche und der äußeren Kante bzw. den äußeren Kanten der Unterseite der Deckplatte angeordnet sein.

Das heißt, die Auflagefläche kann weiter außen angeordnet sein als die Befestigungsfläche bzw. die Reservoirbodenfläche.

Insbesondere kann die Auflagefläche zumindest einen Teil des äußeren Rands der Unterseite der Deckplatte bilden. Wenn die Auflagefläche nur einen Teil des äußeren Rands bildet, liegt die Probenkammer im ordnungsgemäß eingebauten Zustand nicht mit dem gesamten Rand der Unterseite auf einem Probenhalter auf. Die Auflagefläche kann insbesondere auch den gesamten Rand der Unterseite der Deckplatte bilden. Dann liegt die Probenkammer im ordnungsgemäß eingebauten Zustand mit dem gesamten Rand der Unterseite auf einem Probenhalter auf.

Dass die Auflagefläche zumindest einen Teil des äußeren Rands der Unterseite bildet bedeutet, dass sie unmittelbar an mindestens eine der unteren Außenkanten der Deckplatte angrenzt. Wenn die Auflagefläche den ganzen Rand bildet, bedeutet das, dass sämtliche unteren Außenkanten vollständig unmittelbar an die Auflagefläche angrenzen. Wenn zumindest an einen Teil einer unteren Außenkante nicht die Auflagefläche unmittelbar angrenzt, bildet die Auflagefläche höchstens einen Teil des äußeren Rands.

Wenn die Auflagefläche den ganzen äußeren Rand bildet, kann sie im bestimmungsgemäßen Gebrauch, also wenn die Auflagefläche auf dem Probenhalter aufliegt, mit diesem einen Abschluss bilden, insbesondere eine Abdichtung zwischen dem Raum oberhalb der Deckplatte und dem Raum unterhalb der Deckplatte, insbesondere dem Objektivraum. So kann, wenn eine Begasung der Probenkammer von oben erfolgt, der Gaseintritt in den Objektivraum reduziert werden.

Die Unterseite der Deckplatte kann mindestens eine durch die Auflagefläche und die Reservoirbodenfläche oder durch die Auflagefläche und die Befestigungsfläche gebildete Stufenstruktur aufweisen.

Die Auflagefläche kann alternativ oder zusätzlich in einer ersten, im bestimmungsgemäßen Gebrauch horizontal angeordneten, Ebene angeordnet sein und die Reservoirbodenfläche oder die Befestigungsfläche kann in einer zweiten, im bestimmungsgemäßen Gebrauch horizontal angeordneten, Ebene angeordnet sein. Die Unterseite der Deckplatte kann zwischen der Auflagefläche und der Reservoirbodenfläche oder zwischen der Auflagefläche und der Befestigungsfläche eine Fläche aufweisen, die in einer dritten, im bestimmungsgemäßen Gebrauch horizontal angeordneten, Ebene angeordnet ist, die gegenüber Auflagefläche nach oben versetzt angeordnet ist. Insbesondere kann diese Fläche, in der Draufsicht auf die Probenkammer, die Reservoirbodenfläche bzw. Befestigungsfläche vollständig umgeben, so dass Reservoirbodenfläche bzw. Befestigungsfläche nicht an die Auflagefläche angrenzt. In diesem Fall bildet die Auflagefläche mit der Reservoirbodenfläche bzw. Befestigungsfläche keine Stufenstruktur.

Die Auflagefläche kann in Form einer durchgehenden Fläche ausgebildet sein. Beispielsweise kann sie dann den gesamten, insbesondere äußeren, Rand der Unterseite der Deckplatte bilden.

Alternativ kann die Auflagefläche mehrere voneinander durch Trennelemente getrennte Teilflächen aufweisen, wobei die Trennelemente insbesondere jeweils in Form eines Standelements, das sich von der Auflagefläche nach unten erstreckt, oder in Form einer Unterbrechung ausgebildet sein können. Dabei kann es sich beispielsweise um die weiter unten beschriebenen Standelemente handeln. Wenn die Auflagefläche mehrere Teilflächen aufweist, können alle Teilflächen parallel zu einander und auf einer Höhe angeordnet sein.

Insbesondere kann die Auflagefläche die voneinander getrennten Teilflächen aufweisen und in Form einer um die Befestigungsfläche umlaufend angeordneten Fläche ausgebildet sein, die durch mindestens zwei, insbesondere mindestens drei, Trennelemente in Form von Unterbrechungen und/oder in Form von Standelementen in die getrennten Teilflächen unterteilt ist. Beispielsweise kann die Auflagefläche dann einen Teil des äußeren Rands der Unterseite der Deckplatte bilden.

Der Vorteil der oben beschriebenen Unterbrechungen ist, dass dort, wo keine Auflagefläche vorgesehen ist, also im Bereich der Unterbrechungen, zusätzlicher Platz entsteht, wo das bzw. ein Reservoir angeordnet sein kann.

Die Auflagefläche kann eine erste Teilfläche und eine zweite Teilfläche aufweisen, die voneinander getrennt und auf entgegengesetzten Seiten der Unterseite der Deckplatte angeordnet sind.

Insbesondere kann die Unterseite der Deckplatte rechteckig ausgebildet sein, also eine rechteckige Grundfläche aufweisen, und die erste Teilfläche und die zweite Teilfläche jeweils an einer der langen Seiten oder jeweils an einer der kurzen Seiten der Unterseite der Deckplatte angeordnet sein. Das heißt, die erste Teilfläche kann an einer ersten langen Seite angeordnet sein und die zweite Teilfläche kann an der dieser ersten langen Seite gegenüberliegenden zweiten langen Seite angeordnet sein. Alternativ kann die erste Teilfläche an einer ersten kurzen Seite angeordnet sein und die zweite Teilfläche kann an der dieser ersten kurzen Seite gegenüberliegenden zweiten kurzen Seite angeordnet sein. Alternativ kann die Deckplatte eine kreisförmige Grundfläche aufweisen und die beiden Teilflächen gegenüberliegend, also beispielsweise am Umfang des Kreises und auf einer gemeinsamen Linie durch den Mittelpunkt, angeordnet sein. In all diesen Fällen sind die Teilflächen also auf entgegengesetzten Seiten der Unterseite der Deckplatte angeordnet.

Die Auflagefläche kann zusätzlich zu einer ersten und einer zweiten Teilfläche eine dritte Teilfläche und/oder eine vierte Teilfläche aufweisen, die voneinander und von der ersten Teilfläche und der zweiten Teilfläche getrennt angeordnet sind.

Insbesondere kann die Unterseite der Deckplatte rechteckig ausgebildet sein, die erste Teilfläche und die zweite Teilfläche können jeweils an einer der langen Seiten und die dritte Teilfläche und/oder die vierte Teilfläche können jeweils an einer der kurzen Seiten der Unterseite der Deckplatte angeordnet sein.

Das heißt, es kann an den beiden langen Seiten und einer oder beiden der kurzen Seiten je eine Teilfläche angeordnet sein. Alternativ können auch an beiden kurzen Seiten und nur an einer der beiden langen Seiten je eine Teilfläche angeordnet sein.

Die Auflagefläche kann aus einer Vielzahl von, insbesondere mindestens drei, Teilflächen bestehen, die voneinander getrennt und, insbesondere in gleichmäßigen Abständen, entlang der Außenseite der Unterseite der Deckplatte angeordnet sind.

Insbesondere kann die Unterseite der Deckplatte rund ausgebildet sein und die Teilflächen können, insbesondere in gleichmäßigen Abständen, entlang des Umfangs der Unterseite der Deckplatte angeordnet sein.

Die Deckplatte kann mindestens zwei insbesondere mindestens drei, insbesondere mindestens vier, Standelemente aufweisen, die sich von der Auflagefläche nach unten erstrecken, wobei die Standelemente jeweils eine Standfläche aufweisen, die gegenüber der Auflagefläche nach unten versetzt angeordnet ist, insbesondere gegenüber der Reservoirbodenfläche oder gegenüber der Unterseite der Bodenplatte nach unten versetzt angeordnet ist. Alle Standelemente können die gleiche Höhe haben. Das heißt, der Versatz nach unten aller Standflächen gegenüber der Auflagefläche kann gleich sein.

Die oben beschriebenen Trennelemente können als solche Standelemente ausgebildet sein. Die Standelemente müssen aber nicht derart ausgebildet und angeordnet sein, dass dadurch Teilflächen der Auflagefläche voneinander getrennt werden.

Die Standelemente können, in der Draufsicht auf die Probenkammer, zu der Befestigungsfläche bzw. der Reservoirbodenfläche beabstandet angeordnet sein.

Insbesondere kann, in der Draufsicht auf die Probenkammer, ein Teil der Auflagefläche zwischen den Standelementen und der Reservoirbodenfläche bzw. der Befestigungsfläche angeordnet sein. Alternativ oder zusätzlich kann, in der Draufsicht auf die Probenkammer, die oben genannte Fläche, die zwischen der Auflagefläche und der Reservoirbodenfläche bzw. Befestigungsfläche angeordnet ist und gegenüber der Auflagefläche nach oben versetzt angeordnet ist, zwischen den Standelementen und der Reservoirbodenfläche bzw. der Befestigungsfläche angeordnet sein.

Die Oberseite der Deckplatte kann eine ganz oder teilweise der Auflagefläche gegenüberliegenden Andrückfläche aufweisen, wobei die Dicke der Deckplatte im Bereich der Andrückfläche kleiner als die maximale Dicke der Deckplatte ist, so dass die Oberseite der Deckplatte eine Stufenstruktur aufweist.

Insbesondere kann die Andrückfläche zumindest einen Teil des äußeren Rands der Oberseite der Deckplatte bilden. Die Andrückfläche kann insbesondere auch den gesamten äußeren Rand der Oberseite der Deckplatte bilden.

Die Andrückfläche kann eben ausgebildet sein, insbesondere parallel zu der Auflagefläche.

Dass die Andrückfläche ganz oder teilweise der Auflagefläche gegenüberliegend angeordnet ist bedeutet, dass die beiden Flächen einander zumindest überlappen, insbesondere deckungsgleich ausgebildet und angeordnet sind.

Dass die Andrückfläche zumindest einen Teil des äußeren Rands der Oberseite bildet bedeutet, dass sie unmittelbar an mindestens eine der oberen Außenkanten der Deckplatte angrenzt. Wenn die Andrückfläche den ganzen Rand bildet, bedeutet das, dass sämtliche oberen Außenkanten vollständig unmittelbar an die Andrückfläche angrenzen. Wenn zumindest an einen Teil einer oberen Außenkante nicht die Andrückfläche unmittelbar angrenzt, bildet die Andrückfläche höchstens einen Teil des äußeren Rands.

Die Andrückfläche kann in Form einer durchgehenden Fläche ausgebildet sein. Beispielsweise kann sie dann den gesamten Rand der Oberseite der Deckplatte bilden.

Alternativ kann die Andrückfläche mehrere voneinander getrennte Teilflächen aufweisen. Insbesondere kann die Andrückfläche in Form einer um die Oberseite der Deckplatte umlaufend angeordneten Fläche ausgebildet sein, die durch mindestens zwei, insbesondere mindestens drei, Unterbrechungen in die getrennten Teilflächen unterteilt ist.

Hinsichtlich der Bedeutung einer durchgehenden Fläche, von getrennten Teilflächen und von Unterbrechungen sei auf die Ausführungen im Zusammenhang mit der Auflagefläche verwiesen, die analog anwendbar sind.

Die Andrückfläche kann eine erste Teilfläche und eine zweite Teilfläche aufweisen, die voneinander getrennt und auf entgegengesetzten Seiten der Oberseite der Deckplatte angeordnet sind. Insbesondere kann die Oberseite der Deckplatte rechteckig ausgebildet sein und die erste Teilfläche und die zweite Teilfläche können jeweils an einer der langen Seiten oder jeweils an einer der kurzen Seiten der Oberseite der Deckplatte angeordnet sein.

Das heißt, die erste Teilfläche der Andrückfläche kann an einer ersten langen Seite angeordnet sein und die zweite Teilfläche der Andrückfläche kann an der dieser ersten langen Seite gegenüberliegenden zweiten langen Seite angeordnet sein. Alternativ kann die erste Teilfläche an einer ersten kurzen Seite angeordnet sein und die zweite Teilfläche kann an der dieser ersten kurzen Seite gegenüberliegenden zweiten kurzen Seite angeordnet sein.

Alternativ kann die Deckplatte eine kreisförmige Grundfläche aufweisen und die beiden Teilflächen gegenüberliegend, also beispielsweise am Umfang des Kreises und auf einer gemeinsamen Linie durch den Mittelpunkt, angeordnet sein.

Die Andrückfläche kann zusätzlich zu der ersten und der zweiten Teilfläche eine dritte Teilfläche und/oder eine vierte Teilfläche aufweisen, die voneinander und von der ersten Teilfläche und der zweiten Teilfläche getrennt angeordnet sind. Insbesondere kann die Oberseite der Deckplatte rechteckig ausgebildet sein, die erste Teilfläche und die zweite Teilfläche jeweils an einer der langen Seiten und die dritte Teilfläche und/oder die vierte Teilfläche jeweils an einer der kurzen Seiten der Oberseite der Deckplatte angeordnet sein.

Das heißt, es kann an den beiden langen Seiten und an einer oder an beiden der kurzen Seiten je eine Teilfläche angeordnet sein. Alternativ können auch an beiden kurzen Seiten und nur an einer der beiden langen Seite je eine Teilfläche angeordnet sein.

Die Andrückfläche kann aus einer Vielzahl von, insbesondere mindestens drei, Teilflächen bestehen, die voneinander getrennt und, insbesondere in gleichmäßigen Abständen, entlang der Außenseite der Oberseite der Deckplatte angeordnet sind. Insbesondere kann die Oberseite der Deckplatte rund ausgebildet und die Teilflächen, insbesondere in gleichmäßigen Abständen, entlang des Umfangs der Oberseite der Deckplatte angeordnet sein.

Insbesondere können die Teilflächen der Andrückfläche deckungsgleich mit den Teilflächen der Auflagefläche der Probenkammer sein.

Die Erfindung betrifft auch ein System umfassend einen Probenhalter, der eine Auflageplatte mit einer Mikroskopieöffnung umfasst, und eine Probenkammer zum Mikroskopieren von Zellen. Die Probenkammer umfasst eine Deckplatte, deren Unterseite eine Auflagefläche aufweist. In der Deckplatte kann ein Reservoir für die Zellen mit einem Reservoirboden ausgebildet sein, die Unterseite der Deckplatte kann eine Reservoirbodenfläche aufweisen und die Probenkammer und der Probenhalter können derart ausgebildet sein, dass, bei bestimmungsgemäßer Anordnung der Probenkammer auf dem Probenhalter, die Reservoirbodenfläche gegenüber der Unterseite der Auflageplatte nach unten versetzt angeordnet ist oder die Reservoirbodenfläche in der Mikroskopieöffnung aufgenommen ist, insbesondere derart, dass die Reservoirbodenfläche mit einer Unterseite der Auflageplatte fluchtet. Alternativ kann die Probenkammer eine Bodenplatte umfassen, wobei die Deckplatte und die Bodenplatte derart ausgebildet und angeordnet sind, dass sie zusammen ein Reservoir für die Zellen mit einem Reservoirboden bilden, wobei die Bodenplatte den Reservoirboden bildet und wobei die Unterseite der Deckplatte eine Befestigungsfläche aufweist, an der die Bodenplatte befestigt ist. Probenkammer und Probenhalter können dann derart ausgebildet sein, dass, bei bestimmungsgemäßer Anordnung der Probenkammer auf dem Probenhalter, die Unterseite der Bodenplatte gegenüber der Unterseite der Auflageplatte nach unten versetzt angeordnet ist oder die Bodenplatte in der Mikroskopieöffnung aufgenommen ist, insbesondere derart, dass die Unterseite der Bodenplatte mit einer Unterseite der Auflageplatte fluchtet.

Insbesondere kann die Probenkammer eine der oben beschriebenen Probenkammern sein, bei denen die Unterseite der Deckplatte eine Auflagefläche und eine Befestigungsfläche, an der die Bodenplatte befestigt ist, aufweist und die Befestigungsfläche gegenüber der Auflagefläche nach unten versetzt angeordnet ist, insbesondere so, dass die Unterseite der Deckplatte eine Stufenstruktur aufweist.

Alternativ kann die Probenkammer eine der oben beschriebenen Probenkammern sein, bei denen die Unterseite der Deckplatte eine Auflagefläche und eine Reservoirbodenfläche aufweist und die Reservoirbodenfläche gegenüber der Auflagefläche nach unten versetzt angeordnet ist, insbesondere so, dass die Unterseite der Deckplatte eine Stufenstruktur aufweist.

Aufgrund der oben beschriebenen Struktur liegt die Probenkammer bei bestimmungsgemäßer Anordnung nicht mit der Bodenplatte bzw. der Reservoirbodenfläche auf dem Probenhalter auf.

Wenn hier beschrieben wird, dass etwas, beispielsweise die Unterseite der Bodenplatte oder die Befestigungsfläche oder die Reservoirbodenfläche mit der Unterseite der Auflageplatte fluchtet, so ist damit gemeint, dass sie mit dem an die Mikroskopieöffnung angrenzenden Bereich der Unterseite der Auflageplatte fluchtet.

Das System kann derart ausgebildet sein, dass der zu mikroskopierende Bereich der bestimmungsgemäß angeordneten Probenkammer oberhalb der Mikroskopieöffnung angeordnet ist. So können durch die Mikroskopieöffnung hindurch von unten die Zellen untersucht werden.

Die Oberseite der Auflageplatte kann einen Auflagebereich umfassen, auf dem die Probenkammer, insbesondere die Auflagefläche der Deckplatte, bei bestimmungsgemäßer Anordnung der Probenkammer auf dem Probenhalter, aufliegt.

Der Probenhalter kann insbesondere derart ausgebildet sein, dass die Oberseite der Auflageplatte einen gegenüber anderen Bereichen der Oberseite der Auflageplatte nach unten versetzten Auflagebereich aufweist, auf dem die Probenkammer, insbesondere die Auflagefläche der Deckplatte, bei bestimmungsgemäßer Anordnung der Probenkammer auf dem Probenhalter, aufliegt, so dass die Oberseite der Auflageplatte eine Stufenstruktur aufweist. Insbesondere kann die Auflageplatte im Auflagebereich eine konstante erste Dicke aufweisen und in den übrigen Bereichen oder zumindest in dem unmittelbar daran angrenzenden Bereich eine konstante zweite Dicke aufweisen, wobei die zweite Dicke größer der ersten Dicke ist und die Differenz aus zweiter und erster Dicke die Stufenhöhe der Stufenstruktur der Oberseite der Auflageplatte ist.

Mit Oberseite ist die Seite der Auflageplatte gemeint, die im bestimmungsgemäßen Gebrauch nach oben weist. Mit Unterseite der Auflageplatte ist die Seite der Auflageplatte gemeint, die im bestimmungsgemäßen Gebrauch nach unten weist.

Der Auflagebereich kann zumindest einen Teil des inneren Rands der Oberseite der Auflageplatte bilden. Dass der Auflagebereich zumindest einen Teil des inneren Rands der Oberseite bildet bedeutet, dass er unmittelbar an mindestens einer der oberen Innenkanten der Auflageplatte angrenzt. Wenn der Auflagebereich den ganzen Rand bildet, bedeutet das, dass sämtliche oberen Innenkanten vollständig unmittelbar an den Auflagebereich angrenzen. Wenn zumindest an einen Teil einer oberen Innenkante nicht der Auflagebereich unmittelbar angrenzt, bildet der Auflagebereich höchstens einen Teil des inneren Rands. Die Innenkanten sind dabei die Kanten, die die Mikroskopieöffnung begrenzen.

Die Befestigungsfläche bzw. die Reservoirbodenfläche kann, bei bestimmungsgemäßer Anordnung der Probenkammer auf dem Probenhalter, in der Mikroskopieöffnung unterhalb des Auflagebereichs der Auflageplatte angeordnet sein, insbesondere mit der Unterseite der Auflageplatte fluchten oder gegenüber der Unterseite der Auflageplatte nach unten versetzt angeordnet sein.

Der Probenhalter kann aus Aluminium oder einer Aluminiumlegierung mit Magnesium ausgebildet sein.

Der Abstand zwischen der Unterseite der Auflageplatte und dem Auflagebereich wo diese an die Mikroskopieöffnung angrenzen, wird als Tiefe der Mikroskopieöffnung bezeichnet. Die Tiefe der Mikroskopieöffnung entspricht, wenn die Unterseite der Auflageplatte und der Auflagebereich planparallel ausgebildet sind, insbesondere der Dicke der Auflageplatte unterhalb des Auflagebereichs. Die Tiefe der Mikroskopieöffnung kann zwischen 0,2 mm und 5 mm, insbesondere zwischen 0,2 mm und 1,5 mm, insbesondere zwischen 0,2 mm und 1 mm, insbesondere zwischen 0,2 mm und 0,5 mm, oder insbesondere zwischen 2 mm und 5 mm, insbesondere 2 mm und 4 mm, betragen. Insbesondere kann die Probenkammer in Form eines Mikroskopieträgers ausgebildet sein und die Tiefe der Mikroksopieöffnung zwischen 0,2 mm und 1,5 mm, insbesondere zwischen 0,2 mm und 1 mm, insbesondere zwischen 0,2 mm und 0,5 mm. Alternativ kann die Probenkammer eine Multititerplatte umfassen und die Tiefe der Mikroskopieöffnung zwischen 0,2 mm und 5 mm, insbesondere zwischen 0,5 mm und 5 mm, insbesondere zwischen 2 mm und 4 mm, betragen.

Sowohl die Oberseite der Auflageplatte als auch die Unterseite der Deckplatte der Probenkammer können jeweils eine wie oben beschriebene Stufenstruktur aufweisen.

Der Abstand, um den die Befestigungsfläche bzw. die Reservoirbodenfläche gegenüber der Auflagefläche nach unten versetzt ist, insbesondere die Stufenhöhe der Stufenstruktur der Unterseite der Deckplatte und die Stufenhöhe der Stufenstruktur der Oberseite der Auflageplatte und gegebenenfalls die Dicke der Bodenplatte können derart gewählt sein, dass im eingebauten Zustand der Probenkammer die Unterseite der Bodenplatte bzw. die Reservoirbodenfläche mit der Unterseite der Auflageplatte fluchtet oder unterhalb der Unterseite der Auflageplatte angeordnet ist.

Beispielsweise kann die Summe der Stufenhöhe der Oberseite der Auflageplatte und der Abstand, um den die Befestigungsfläche bzw. die Reservoirbodenfläche gegenüber der Auflagefläche nach unten versetzt ist, insbesondere die Stufenhöhe der Unterseite der Deckplatte gleich der maximalen Dicke des Probenhalters sein. Dann fluchtet die Unterseite der Deckplatte, insbesondere die Befestigungsfläche bzw. die Reservoirbodenfläche, mit der Unterseite der Auflageplatte. Sofern die Probenkammer eine Bodenplatte umfasst, ist deren Unterseite dann gegenüber der Unterseite des Probenhalters nach unten versetzt. Mit anderen Worten kann der besagte Abstand, insbesondere die Stufenhöhe der Unterseite der Deckplatte, gleich der Tiefe der Mikroskopieöffnung sein.

Alternativ kann die Summe der Stufenhöhe der Oberseite der Auflageplatte und des Abstands, um den die Befestigungsfläche bzw. die Reservoirbodenfläche gegenüber der Auflagefläche nach unten versetzt ist, insbesondere die Höhe der Stufenhöhe der Unterseite der Deckplatte, und, sofern es sich um die Ausführungsform mit Deckplatte und Bodenplatte handelt, der Dicke der Bodenplatte gleich der maximalen Dicke des Probenhalters sein. Wenn zwischen Bodenplatte und Deckplatte keine Klebeschicht angeordnet ist, fluchtet dann die Unterseite der Bodenplatte mit der Unterseite der Auflageplatte.

Alternativ kann, wenn es sich um die Ausführungsform mit Deckplatte und Bodenplatte handelt, die Summe der Stufenhöhe der Oberseite der Auflageplatte des Probenhalters, des Abstands, um den die Befestigungsfläche gegenüber der Auflagefläche nach unten versetzt ist, insbesondere der Stufenhöhe der Unterseite der Deckplatte und der Dicke der Bodenplatte und der Dicke einer Klebeschicht zwischen Deckplatte und Bodenplatte gleich der maximalen Dicke des Probenhalters sein. Dann fluchtet die Unterseite der Bodenplatte mit der Unterseite der Auflageplatte.

Wie oben ersichtlich ist, kann durch die Kombination bestimmter Abstände, um den die Befestigungsfläche bzw. die Reservoirbodenfläche gegenüber der Auflagefläche nach unten versetzt ist, insbesondere Stufenhöhen der Unterseite der Deckplatte, und bestimmter Stufenhöhen der Oberseite des Probenhalters eingestellt werden, wo die Unterseite der Bodenplatte bzw. die Reservoirbodenfläche angeordnet ist. Somit kann die Kombination derart gewählt werden, dass für die jeweiligen Anwendungen und Anforderungen eine optimale Anordnung der Bodenplatte bzw. der Reservoirbodenfläche vorliegt.

Das heißt, die Form der Probenkammer und des Probenhalters, insbesondere die oben beschriebenen Abstände (also Werte für den Versatz) und/oder Stufenstrukturen, können aufeinander abgestimmt ausgebildet sein, so dass die beanspruchte Anordnung der Unterseite der Bodenplatte bzw. der Reservoirbodenfläche vorliegt. Das heißt also beispielsweise so abgestimmt, dass die Reservoirbodenfläche bzw. die Unterseite der Bodenplatte gegenüber der Unterseite der Auflageplatte nach unten versetzt angeordnet ist oder in der Mikroskopieöffnung aufgenommen ist.

Wenn die Unterseite der Bodenplatte bzw. die Reservoirbodenfläche weiter unten angeordnet ist als die Unterseite des Probenhalters, kann verhindert werden, dass der Probenhalter durch das Mikroskopieren verschmutzt wird, beispielsweise mit Immersionsmedien des Immersionsobjektivs. Die Beschädigungsgefahr wird außerdem weiter reduziert.

Der Auflagebereich kann in Form einer durchgehenden Fläche ausgebildet sein. Alternativ kann der Auflagebereich mehrere voneinander getrennte Teilflächen aufweisen. Insbesondere kann der Auflagebereich in Form einer um die Mikroskopieöffnung umlaufend angeordneten Fläche ausgebildet sein, die mindestens zwei Unterbrechungen aufweist, wobei die mehreren voneinander getrennten Teilflächen des Auflagebereichs durch die Unterbrechungen voneinander getrennt sind.

Hinsichtlich der Bedeutung einer durchgehenden Fläche, von getrennten Teilflächen und von Unterbrechungen sei auf die Ausführungen im Zusammenhang mit der Auflagefläche verwiesen, die analog anwendbar sind.

Wenn der Auflagebereich mehrere Teilflächen aufweist, können alle Teilflächen parallel zu einander und auf einer Höhe angeordnet sein.

Der Auflagebereich kann eine erste Teilfläche und eine zweite Teilfläche aufweisen, die voneinander getrennt und auf entgegengesetzten Seiten der Mikroskopieöffnung an die Mikroskopieöffnung angrenzend angeordnet sind. Insbesondere kann die Mikroskopieöffnung rechteckig ausgebildet sein und die erste Teilfläche und die zweite Teilfläche können jeweils an einer der langen Seiten oder jeweils an eine der kurzen Seiten der Mikroskopieöffnung angrenzend angeordnet sein.

Das heißt, die erste Teilfläche des Auflagebereichs kann an einer ersten langen Seite angeordnet sein und die zweite Teilfläche des Auflagebereichs kann an der dieser ersten langen Seite gegenüberliegenden zweiten langen Seite angeordnet sein. Alternativ kann die erste Teilfläche an einer ersten kurzen Seite angeordnet sein und die zweite Teilfläche kann an der dieser ersten kurzen Seite gegenüberliegenden zweiten kurzen Seite angeordnet sein.

Alternativ kann die Mikroskopieöffnung eine kreisförmige Grundfläche aufweisen und die beiden Teilflächen können gegenüberliegend, also beispielsweise am Umfang des Kreises und auf einer gemeinsamen Linie durch den Mittelpunkt, angeordnet sein.

Der Auflagebereich kann zusätzlich zu der ersten und der zweiten Teilfläche eine dritte Teilfläche und/oder eine vierte Teilfläche aufweisen, die voneinander und von der ersten Teilfläche und der zweiten Teilfläche getrennt angeordnet sind. Insbesondere kann die Mikroskopieöffnung rechteckig ausgebildet sein, die erste Teilfläche und die zweite Teilfläche jeweils an einer der langen Seiten und die dritte Teilfläche und/oder die vierte Teilfläche jeweils an einer der kurzen Seiten der Mikroskopieöffnung angrenzend angeordnet sein.

Das heißt, es kann an den beiden langen Seiten und an einer oder an beiden der kurzen Seiten je eine Teilfläche angeordnet sein. Alternativ können auch an beiden kurzen Seiten und nur an einer der beiden langen Seite je eine Teilfläche angeordnet sein.

Der Auflagebereich kann aus einer Vielzahl von, insbesondere mindestens drei, Teilflächen bestehen, die voneinander getrennt und, insbesondere in gleichmäßigen Abständen, entlang der Mikroskopieöffnung angeordnet sind. Insbesondere kann die Mikroskopieöffnung rund ausgebildet und die Teilflächen, insbesondere in gleichmäßigen Abständen, entlang des Umfangs der Oberseite der Deckplatte angeordnet sein.

Der Auflagebereich des Probenhalters kann deckungsgleich mit der Andrückfläche und/oder der Auflagefläche der Probenkammer sein.

Die Auflageplatte kann im Auflagebereich Öffnungen und/oder Unterbrechungen, insbesondere die oben beschriebenen Unterbrechungen des Auflagebereichs, aufweisen. Die Öffnungen und/oder Unterbrechungen können sich jeweils bis zu der Unterseite der Auflageplatte erstrecken. Sie können also jeweils als Durchbruch in der Auflageplatte im Auflagebereich ausgebildet sein. Alternativ können die Öffnungen und/oder Unterbrechungen jeweils in Form einer Aussparung in der Auflageplatte ausgebildet sein, die sich nicht bis zu der Unterseite der Auflageplatte erstreckt.

Die Deckplatte kann mindestens zwei insbesondere mindestens drei, insbesondere mindestens vier, Standelemente aufweisen, die sich von der Auflagefläche nach unten erstrecken, wobei die Standelemente jeweils eine Standfläche aufweisen, die gegenüber der Auflagefläche nach unten versetzt angeordnet ist, insbesondere gegenüber der Reservoirbodenfläche oder gegenüber der Unterseite der Bodenplatte nach unten versetzt angeordnet ist. Insbesondere kann die Deckplatte die oben beschriebenen Standelemente umfassen. Die Öffnungen und/oder Unterbrechungen, die der Auflagebereich aufweist, können dann derart ausgebildet und angeordnet sein, dass die Standelemente in den Öffnungen und/oder Unterbrechungen aufgenommen sind, wenn die Probenkammer bestimmungsgemäß auf dem Probenhalter aufliegt.

Insbesondere können die Standelemente vollständig in den Öffnungen und/oder Unterbrechungen aufgenommen sein. Wenn eine Öffnung und/oder Unterbrechung in Form eines Durchbruchs ausgebildet ist, kann das zugehörige Standelement sich alternativ durch den Durchbruch hindurch erstrecken und seine Standfläche im Vergleich zur Unterseite der Auflageplatte nach unten versetzt sein.

Das System kann einen Probenniederhalter umfassen und die Probenkammer kann eine der oben beschriebenen Probenkammern mit der Andrückfläche sein. Der Probenniederhalter kann dann derart ausgebildet sein, dass er die Probenkammer im eingebauten Zustand auf die Auflageplatte drückt. Der Probenniederhalter umfasst eine, insbesondere ein- oder mehrteilige, Niederhaltestruktur, beispielsweise umfassend ein oder mehrere Stege, die auf die Andrückfläche der Oberseite der Deckplatte drückt.

Der Probenniederhalter kann derart ausgebildet sein, dass er die Probenkammer im eingebauten Zustand fixiert, beispielsweise so, dass sie nicht verrutscht. Insbesondere kann die Probenkammer mittels des Probenniederhalters festgeklemmt sein. So ermöglicht der Probenniederhalter, dass der gesamte Aufbau mechanisch stabilisiert und entsprechend auch die Fokusstabilität verbessert wird. Außerdem kann der Probenniederhalter derart ausgebildet sein, dass er eine vor dem Einbau verkrümmte Probenkammer, in eine ebene Form bringt. Das ist besonders vorteilhaft bei einer Probenkammer mit einer Deckplatte aus Plastik. Solche Deckplatten neigen aufgrund der Materialeigenschaften und der Produktionstechniken dazu, sich zu verziehen.

Der Probenniederhalter kann im eingebauten Zustand an dem Probenhalter oder an einem Mikroskoptisch, beispielsweise dem unten beschriebenen Mikroskoptisch, befestigt sein.

Der Probenniederhalter kann derart ausgebildet und angeordnet sein, dass er die Probenkammer mittels Schwerkraft und/oder Magnetkraft und/oder mechanischer Federkraft auf die Auflageplatte drückt. Alternativ oder zusätzlich kann der Probenniederhalter im bestimmungsgemäßen Gebrauch mittels einer oder mehrerer Schrauben an den Probenhalter geschraubt sein. Insbesondere kann dann die Probenkammer im Bereich der Andrückfläche zwischen dem Probenniederhalter und der Auflageplatte des Probenhalters eingeklemmt sein. Die Schraube oder Schrauben der Schrauben können dabei insbesondere in einem Bereich außerhalb des Auflagebereichs des Probenhalters angeordnet sein.

Die Deckplatte kann insbesondere eine rechteckige Grundfläche aufweisen und die Andrückfläche kann zwei Teilflächen aufweisen, die an gegenüberliegenden Seiten, insbesondere den beiden langen Seiten, der Deckplatte angeordnet sind. Die Niederhaltestruktur kann dann zwei jeweils unterbrochene oder durchgehende Stege umfassen, wobei jeweils ein Steg auf einer der Teilflächen der Andrückflächen aufliegt.

Die Niederhaltestruktur kann insbesondere derart ausgebildet sein, dass sie bei bestimmungsgemäßer Anordnung ausschließlich auf den Andrückflächen der Probenkammer aufliegt.

Die Niederhaltestruktur und der Probenhalter können derart ausgebildet sein, dass die Niederhaltestruktur bei bestimmungsgemäßer Anordnung nur in einem Bereich auf der Andrückfläche aufliegt, der deckungsgleich mit dem Auflagebereich der Auflageplatte ist.

Das System kann alternativ oder zusätzlich einen Mikroskoptisch umfassen. Der Probenhalter kann integral mit dem Mikroskoptisch ausgebildet sein oder separat davon ausgebildet sein und bei bestimmungsgemäßer Nutzung auf dem Mikroskoptisch aufliegen oder darin als Einsatz eingesetzt sein. Der Mikroskoptisch eines inversen Mikroskops ist derart ausgebildet, dass er die bestimmungsgemäß angeordnete Probenkammer in einer Position oberhalb des Objektivs hält.

Die Erfindung betrifft auch eine Verwendung einer der oben beschriebenen Probenkammern zum Mikroskopieren von Zellen, die sich in dem Reservoir der Probenkammer befinden, insbesondere zur Lebendzellmikroskopie. Die Erfindung kann insbesondere eine Verwendung der Probenkammer zum Wachstum von Zellkulturen, insbesondere umfassend eine Versorgung der Zellen mit Nährstoffen, umfassen.

Die Erfindung betrifft auch eine Verwendung eines der oben beschriebenen Systeme zum Mikroskopieren von Zellen, die sich in dem Reservoir der Probenkammer befinden, insbesondere zur Lebendzellmikroskopie. Insbesondere kann die Verwendung umfassen, dass die Probenkammer temperiert wird, insbesondere durch Wärmezufuhr mittels Wärmeleitung durch den Probenhalter und/oder den Mikroskoptisch. Die Erfindung kann insbesondere eine Verwendung des Systems zum Wachstum von Zellkulturen, insbesondere umfassend eine Versorgung der Zellen mit Nährstoffen, umfassen.

Das Mikroskopieren kann ein inverses hochauflösendes Mikroskopieren mit einem hochaperturigen Immersionsobjektiv umfassen.

Weitere Merkmale und Vorteile werden nachfolgend anhand der beispielhaften Figuren erläutert. Dabei zeigen:
Figur 1a einen schematischen, nicht maßstabsgetreuen Querschnitt einer ersten Ausführungsform der Probenkammer;
Figur 1b eine schematische, nicht maßstabsgetreue Draufsicht auf die erste Ausführungsform der Probenkammer;
Figur 1c einen schematischen, nicht maßstabsgetreuen Längsschnitt der ersten Ausführungsform der Probenkammer;
Figuren 1d bis 1m schematische, nicht maßstabsgetreue Darstellungen von Abwandlungen der ersten Ausführungsform der Probenkammer;
Figur 2 einen schematischen, nicht maßstabsgetreuen Querschnitt einer zweiten Ausführungsform der Probenkammer;
Figur 3 einen schematischen, nicht maßstabsgetreuen Querschnitt einer dritten Ausführungsform der Probenkammer;
Figur 4a einen schematischen, nicht maßstabsgetreuen Querschnitt einer Ausführungsform eines Systems mit Probenhalter und Probenkammer;
Figur 4b eine schematische, nicht maßstabsgetreue Darstellung eines Teils des Probenhalters;
Figur 5 eine schematische, nicht maßstabsgetreue Draufsicht auf die Ausführungsform des in Figur 4a gezeigten Systems;
Figur 6a einen schematischen, nicht maßstabsgetreuen Querschnitt einer Ausführungsform eines Systems mit Probenkammer, Probenhalter und Probenniederhalter;
Figur 6b bis 6d schematische, nicht maßstabsgetreue Darstellungen von Niederhaltestrukturen;
Figuren 6e bis 6g schematische, nicht maßstabsgetreue Darstellungen verzogener oder gebogener Probenkammern;
Figuren 7a bis 7c schematische, nicht maßstabsgetreue Schrägansichten einer Ausführungsform des Systems mit Probenkammer, Probenhalter und Probenniederhalter;
Figur 8 eine schematische, nicht maßstabsgetreue Seitenansicht auf einen Teil eines aus dem Stand der Technik bekannten Systems.

In den Figuren werden, soweit im Folgenden nicht anders spezifiziert, für gleich bezeichnete Elemente dieselben Bezugszeichen verwendet.

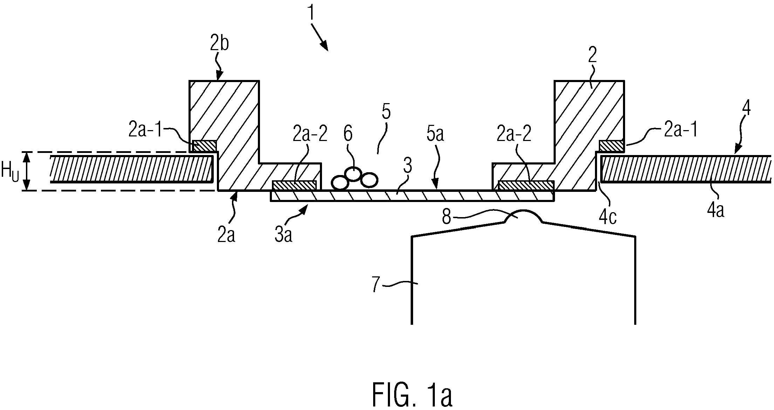

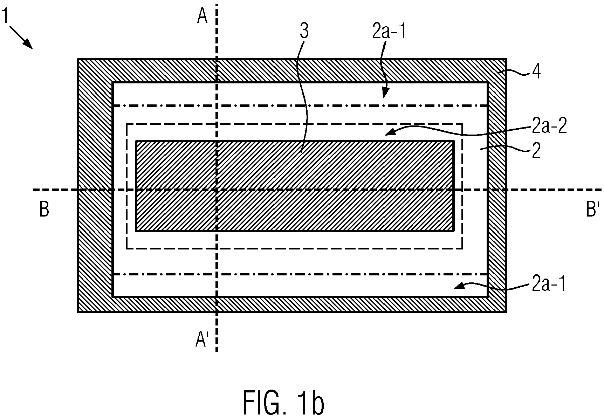

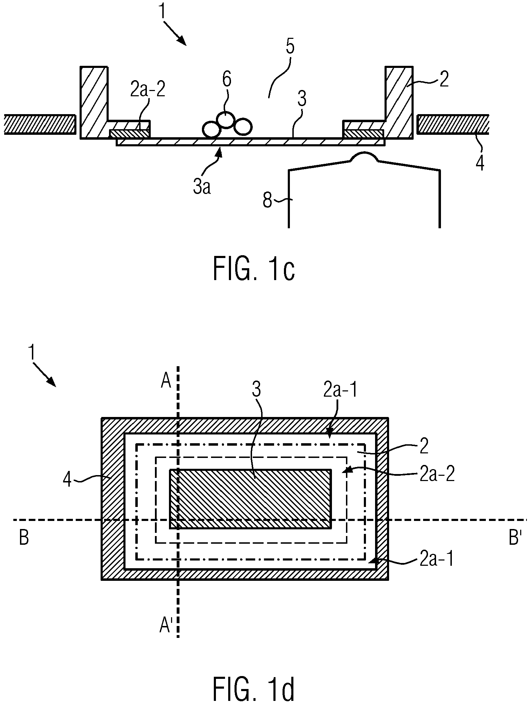

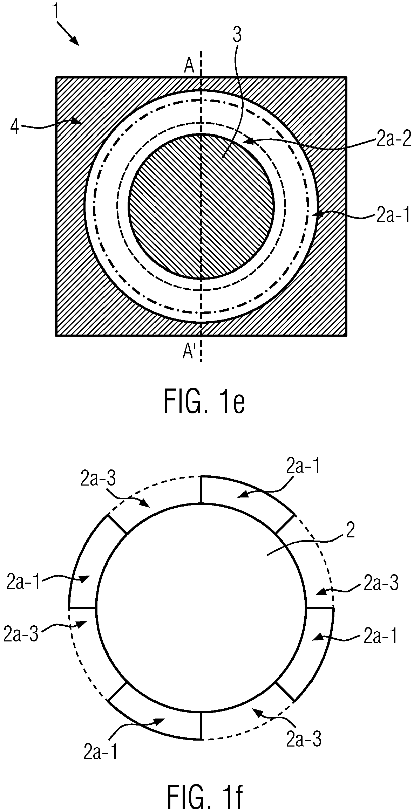

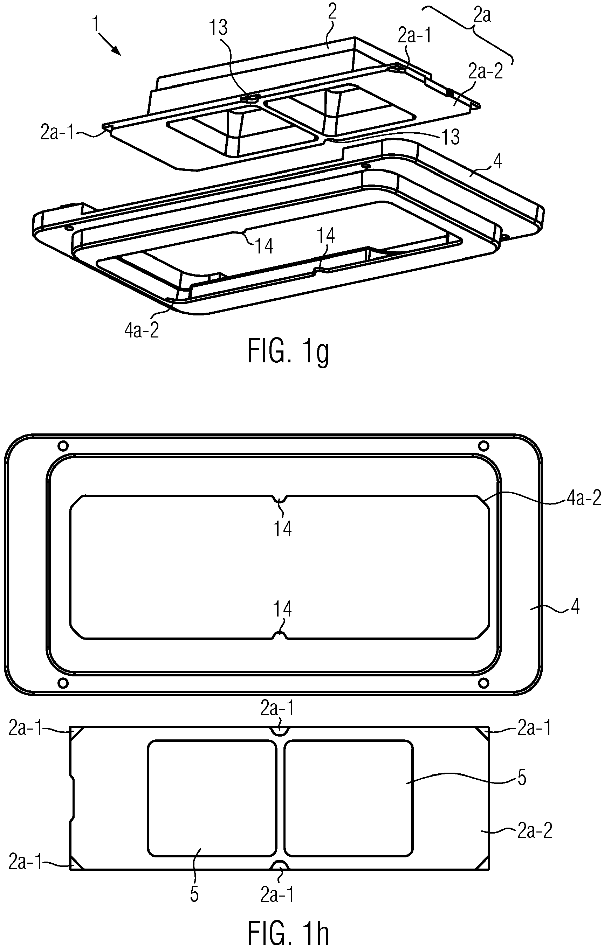

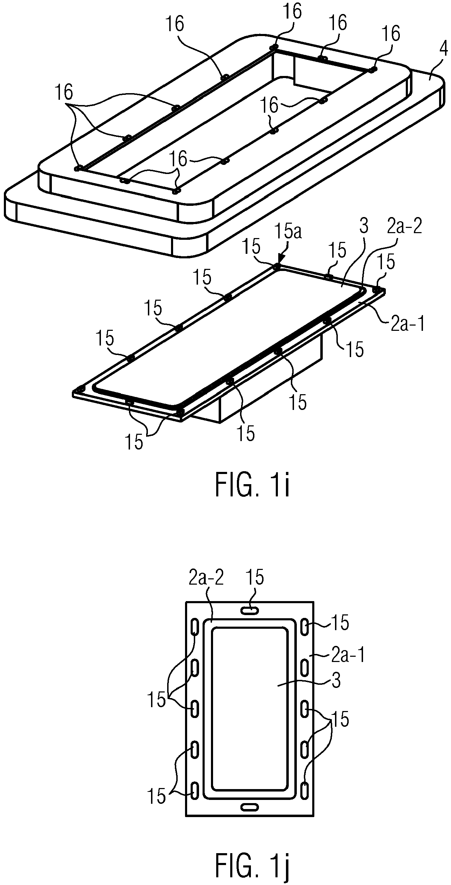

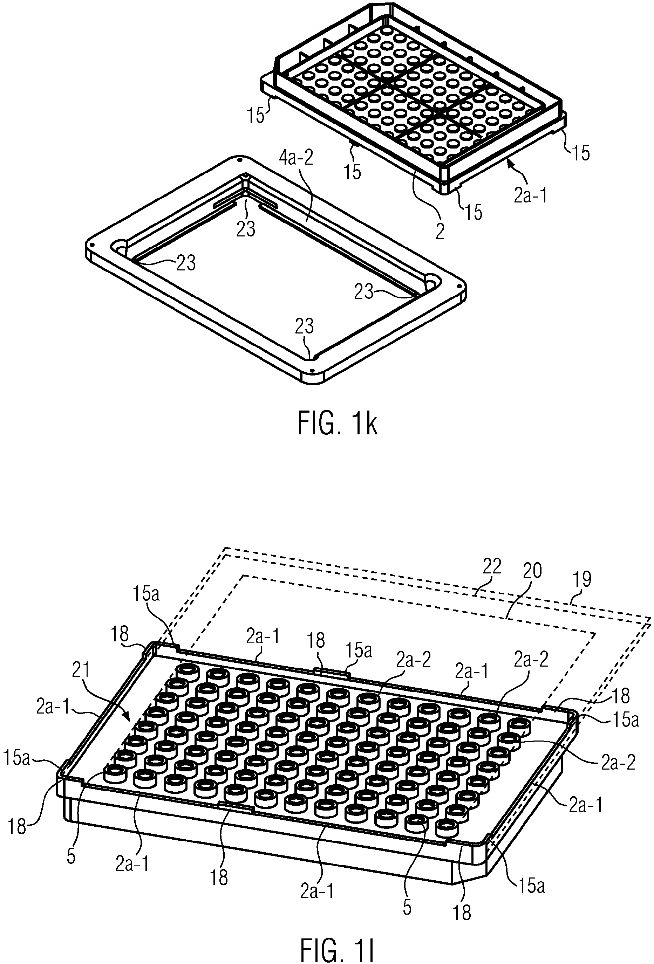

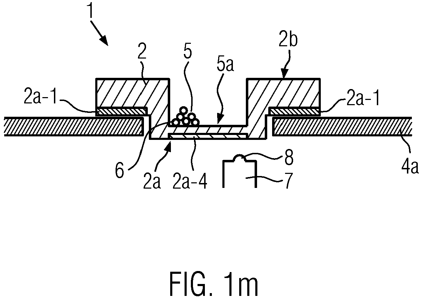

Figur 1 a zeigt einen Querschnitt einer Probenkammer 1 gemäß einer ersten Ausführungsform. Die Probenkammer umfasst eine Deckplatte 2, die hier beispielsweise im Bereich des Reservoirs 5 nach unten offen ist, und eine an der Deckplatte befestigte Bodenplatte 3, wobei die Bodenplatte den Reservoirboden 5a bildet. Dabei kann es sich beispielsweise um eine Deckplatte in Form eines Spritzgussteils aus Plastik und eine Bodenplatte in Form eines Deckglasbodens handeln.

Der Deckglasboden kann aus Kunststoff oder Glas ausgebildet sein. Form, insbesondere Dicke, und Material des Deckglasbodens sind so gewählt, dass durch den Deckglasboden hindurch mikroskopiert werden kann.

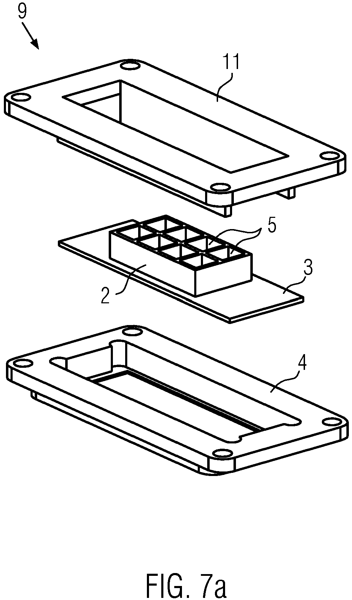

Die Deckplatte und die Bodenplatte sind derart ausgebildet und angeordnet, dass sie zusammen ein Reservoir 5 für Zellen 6 ausbilden. Hier ist vereinfacht eine Probenkammer mit einem einzigen Reservoir gezeigt, alternativ kann die Probenkammer aber eine Vielzahl von Reservoiren umfassen, die dann beispielsweise nebeneinander angeordnet und durch Wände voneinander getrennt sind. Beispielshafte Probenkammern mit einer Mehrzahl von Reservoiren ist in Figuren 1g, 1h, 1k, 1l und 7a bis 7c gezeigt.

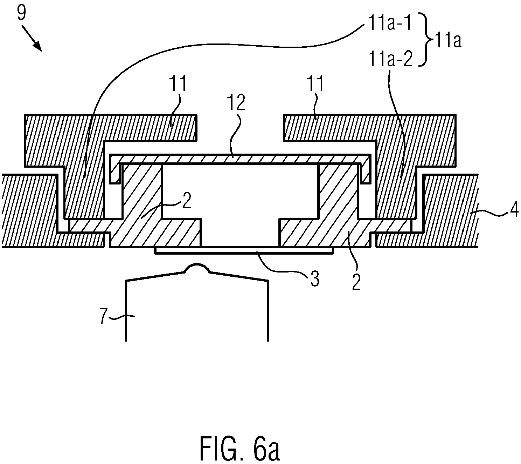

In Figur 1a ist das Reservoir nach oben hin offen, aber es ist denkbar, dass das Reservoir von oben abgedeckt ist, entweder, indem die Deckplatte selbst derart ausgebildet ist, dass sie das Reservoir abdeckt, oder indem eine Abdeckung 12 oben auf der Deckplatte aufgelegt, insbesondere daran befestigt, ist. Eine beispielhafte Ausgestaltung mit einer Abdeckung ist in Figur 6a gezeigt.

Die Bodenplatte ist an der Unterseite 2a der Deckplatte befestigt. Genauer weist die Unterseite der Deckplatte eine Auflagefläche 2a-1 und eine Befestigungsfläche 2a-2 auf. Diese sind hier jeweils eben ausgebildet und parallel zueinander angeordnet. Die Auflagefläche 2a-1 liegt im eingebauten Zustand der Probenkammer auf dem Probenhalter auf. Die Bodenplatte ist an der Befestigungsfläche 2a-2 der Unterseite der Deckplatte befestigt. Auch die Unterseite der Bodenplatte ist im vorliegenden Beispiel eben und parallel zu der Auflagefläche und der Befestigungsfläche ausgebildet und angeordnet.

Die Befestigungsfläche ist gegenüber der Auflagefläche nach unten versetzt angeordnet, beispielsweise um eine Höhe Hu. Im vorliegenden Fall weist dadurch die Unterseite der Deckplatte eine Stufenstruktur auf. Die Höhe Hu wird auch als Stufenhöhe dieser Stufenstruktur bezeichnet.

Die Probenkammer ist in Figur 1a in der bestimmungsgemäßen Ausrichtung gezeigt, in der die Unterseite 3a der Bodenplatte nach unten weist. Insbesondere sind hier Auflagefläche, Befestigungsfläche und Unterseite der Bodenplatte horizontal angeordnet.

In Figur 1a ist zur Veranschaulichung auch ein Teil eines Probenhalters 4 dargestellt, der nicht Teil der Probenkammer ist. Der hier gezeigte Probenhalter umfasst eine Auflageplatte 4a mit einer Mikroskopieöffnung 4c. Die Probenkammer ist in bestimmungsgemäßer Anordnung auf dem Probenhalter dargestellt.

Wie man anhand dieser Darstellung erkennt, ragt ein Teil der Stufenstruktur in die Mikroskopieöffnung hinein. Genauer liegt die Probenkammer mit der Auflagefläche ihrer Unterseite auf der Oberseite der Auflageplatte auf. Ein an die Auflagefläche angrenzender Teil der Deckplatte erstreckt sich nach unten in die Mikroskopieöffnung, hier insbesondere durch die Mikroskopieöffnung hindurch. Am unteren Ende dieses Teils der Deckplatte ist die Befestigungsfläche angeordnet, an der die Bodenplatte befestigt ist.

Die Bodenplatte liegt nicht auf dem Probenhalter auf. Vielmehr ist sie unterhalb der Mikroskopieöffnung angeordnet. Die Unterseite der Bodenplatte ist gegenüber der Unterseite der Auflageplatte nach unten versetzt, und zwar um einen Abstand A.

In Figur 1a ist zur Veranschaulichung auch ein Teil eines optischen Systems, nämlich das Objektiv 7, beispielsweise ein Immersionsobjektiv, mit der Frontlinse 8 gezeigt, das ebenfalls nicht Teil der Probenkammer ist. Anhand der Darstellung kann man erkennen, dass eine Annäherung der Frontlinse an die Unterseite der Bodenplatte über deren gesamte Breite möglich ist, ohne dabei Gefahr zu laufen, beim seitlichen Verfahren des Objektivs an die Auflageplatte 4a des Probenhalters zu stoßen.

In Figur 1b ist eine Draufsicht auf die Probenkammer 1 gezeigt, wobei der in Figur 1a gezeigte Querschnitt entlang der Linie A-A' verläuft. Die Position der Bodenplatte und, soweit durch die Probenkammer verdeckt, die Begrenzung der Mikroskopieöffnung sind mit gestrichelten Linien dargestellt. Hier ist beispielhaft eine Deckplatte 2 dargestellt, deren Oberseite 2b und Unterseite 2a eine rechteckige Grundform aufweisen.

In Figur 1b ist gezeigt, dass die Auflagefläche 2a-1 zwei getrennte Teilflächen aufweist, die einander gegenüberliegend angeordnet sind. Hier ist beispielhaft eine Teilfläche an jeder der langen Seiten der Unterseite der Deckplatte angeordnet. Die Auflagefläche bildet hier einen Teil des Rands der Unterseite, nämlich den Rand an den beiden langen Seiten der Unterseite. An den beiden kurzen Seiten ist hier keine Auflagefläche vorgesehen.

Figur 1c zeigt einen Längsschnitt entlang der in Figur 1b eingetragenen Linie B-B', so dass erkennbar ist, wie die Deckplatte in diesem Beispiel an den kurzen Enden ausgebildet ist, nämlich ohne Stufenstruktur. Vielmehr erstreckt sich die äußere Seitenwand der Deckplatte gerade nach unten zu der Befestigungsfläche hin.

Alternativ zu der in Figur 1b und 1c gezeigten Variante können die beiden Teilflächen der Auflagefläche aber auch an den beiden kurzen Seiten der Unterseite der Deckplatte angeordnet sein oder zusätzlich zu den zwei Teilflächen an den langen Seiten kann an einer oder an beiden kurzen Seiten je eine Teilfläche der Auflagefläche angeordnet sein.

Alternativ kann eine einzige durchgehende umlaufende Auflagefläche vorgesehen sein, wie in der Draufsicht in Figur 1d angedeutet.

In Figur 1e ist eine Abwandlung der ersten Ausführungsform in Draufsicht gezeigt. Die Deckplatte 2 und die Bodenplatte 3 haben eine kreisförmige Grundform. Die Unterseite 2a der Deckplatte kann eine derartige Stufenstruktur aufweisen, dass sie einen Querschnitt wie den in Figur 1a gezeigten Querschnitt hat. Die Auflagefläche 2a-1 bildet hier einen inneren Rand der Unterseite der Deckplatte. Die Auflagefläche ist hier durchgehend und in Form eines Kreisrings ausgebildet.

Der Rand kann alternativ auch in Form eines Kreisrings mit mehreren Unterbrechungen 2a-3 ausgebildet sein, so dass die Auflagefläche mehrere voneinander getrennte Teilflächen aufweist, wie in Figur 1f vereinfacht dargestellt. Die Unterbrechungen bilden also Trennelemente zwischen den Teilflächen. Die Auflageflächen sind in dieser Ausführungsform, hier beispielhaft in gleichmäßigen Abständen, entlang des Kreisumfangs angeordnet. Alternativ können statt wie hier gezeigt auch nur zwei oder drei oder mehr als vier Teilflächen vorgesehen sein.

In Figuren 1g und 1h ist eine ist eine weitere Abwandlung der ersten Ausführungsform in einer Ansicht von schräg unten und in einer Draufsicht auf die Unterseite der Deckplatte 2 gezeigt. Der Übersichtlichkeit halber wird hier auf die Darstellung der Bodenplatte verzichtet, die beispielsweise wie in den Figuren 1a bis 1d ausgebildet sein kann und an der Befestigungsfläche 2a-2 befestigt ist. Beispielhaft umfasst die Probenkammer hier zwei Reservoire 5.

Wie hier erkennbar ist, ist die Deckplatte 2 im Wesentlichen rechteckig ausgebildet und die Unterseite der Deckplatte weist an jeder der Ecken eine Teilfläche der Auflagefläche auf. Außerdem weist sie an jeder der langen Seiten des Rechtecks, hier etwa mittig, eine weitere Teilfläche der Auflagefläche auf. Somit weist die Auflagefläche insgesamt sechs Teilflächen auf. In der Schrägansicht ist jeweils erkennbar, dass durch die Unterseite derart ausgebildet ist, dass durch jede Teilfläche und die nach unten versetzte Befestigungsfläche je eine Stufenstruktur ausgebildet wird.

Durch die Form der Auflageflächen an den langen Seiten entstehen dort zwei Aufnahmen 13 in der Unterseite der Probenkammer, hier beispielsweise seitlich zur Innenseite der Deckplatte hin begrenzte Aufnahmen, die nach oben durch die Auflagefläche begrenzt sind.

Beispielhaft haben hier die Teilflächen an den Ecken jeweils eine dreieckige Form und die Teilfläche an den langen Seiten sind jeweils halbkreisförmig ausgebildet. Die Auflagefläche macht hier weniger als 10 % der Gesamtfläche der Unterseite der Deckplatte aus. Sie kann insbesondere weniger als 5 %, insbesondere weniger als 2 % der Gesamtfläche der Unterseite ausmachen.

Zur Veranschaulichung der Ausführungsform ist in den Figuren 1g und 1h jeweils auch ein Probenhalter gezeigt, um zu veranschaulichen, wie die Teilflächen der Auflagefläche jeweils auf dem Auflagebereich der Auflageplatte eines beispielhaften Probenhalters aufliegen können. Im hier gezeigten Fall hat der Probenhalter eine im wesentlichen rechteckige Mikroskopieöffnung, an deren Ecken und an Teilen deren langen Seiten die Probenkammer, genauer, deren Auflagefläche, auf dem Auflagebereich aufliegt. In diesem Beispiel weist der Auflagebereich des Probenhalters an den langen Seiten der Mikroskopieöffnung jeweils eine Halbkreisstruktur 14 auf. Diese ist in den Aufnahmen der Unterseite der Probenkammer aufgenommen, wenn die Probenkammer bestimmungsgemäß auf dem Probenhalter angeordnet ist.

Ein erfindungsgemäßes System umfasst die Probenkammer und den Probenhalter, wie sie in Figuren 1g und 1h gezeigt und oben beschrieben sind.

In Figuren 1i und 1j ist eine weitere Abwandlung der ersten Ausführungsform in einer Ansicht von schräg unten (Probenkammer und Probenhalter sind also in Figur 1i mit ihren Unterseiten nach oben gerichtet und somit nicht in der Ausrichtung für den bestimmungsgemäßen Gebrauch dargestellt) und in einer Draufsicht auf die Unterseite der Deckplatte 2 gezeigt. Die Unterseite der Deckplatte weist im Bereich der Auflagefläche mehrere Standelemente 15 auf. Die Standflächen 15a der Standelemente sind gegenüber der Auflagefläche mindestens so weit nach unten versetzt wie die Unterseite der Bodenplatte. Somit steht die Probenkammer, wenn sie beispielsweise auf einer ebenen Fläche steht, beispielsweise auf einem Tisch, auch auf den Standelementen, insbesondere nur auf den Standelementen, wenn die Standflächen weiter nach unten versetzt sind als die Unterseite der Bodenplatte.

Zur Veranschaulichung der Ausführungsform ist in den Figuren 1i und 1j jeweils auch ein Probenhalter gezeigt, dessen Auflageplatte im Bereich des Auflagebereichs Öffnungen 16 aufweist, die derart ausgebildet und angeordnet sind, dass die Standelemente in den Öffnungen aufgenommen sind, wenn die Probenkammer bestimmungsgemäß auf dem Probenhalter aufliegt. Hier erstrecken sich die Öffnungen bis zur Unterseite der Auflageplatte, sie sind also als Durchbrüche durch die Auflageplatte ausgebildet. Alternativ können sie auch als Aufnahmen ausgebildet sein, die sich nicht bis zur Unterseite der Auflageplatte erstrecken, also unten geschlossen sind.

Ein erfindungsgemäßes System umfasst die Probenkammer und den Probenhalter, wie sie in Figuren 1i und 1j gezeigt sind.

In Figuren 1k und 1l ist eine weitere Abwandlung der ersten Ausführungsform in einer Ansicht von schräg oben und in Ansicht von schräg unten auf die Deckplatte 2 gezeigt.

Der Übersichtlichkeit halber wird hier auf die Darstellung der Bodenplatte verzichtet, die beispielsweise wie in den Figuren 1a bis 1d ausgebildet sein kann. Beispielhaft umfasst die Probenkammer hier eine Vielzahl von Reservoiren.

Die Unterseite der Deckplatte weist im Bereich der Auflagefläche mehrere Standelemente auf die sich von der Auflagefläche nach unten erstrecken. Hier umfasst die Auflagefläche mehrere Teilflächen, die durch Trennelemente 18 in Form der Standelemente voneinander getrennt sind. Genauer ist die Auflagefläche, in Draufsicht auf die Probenkammer, in Form einer um die Befestigungsfläche umlaufend angeordneten Fläche ausgebildet ist, die durch Standelemente in die getrennten Teilflächen unterteilt ist.

In Figuren 1k und 1l sind die Standelemente an den Ecken und an den langen Seiten der im Wesentlichen rechteckig ausgebildeten Unterseite der Deckplatte angeordnet. Die Standelemente bilden hier zusammen mit den Auflageflächen einen, hier durchgehenden, umlaufenden Rand der Unterseite der Deckplatte, was aber nicht zwingend der Fall sein muss. Insbesondere kann der Rand auch eine oder mehrere Unterbrechungen aufweisen, die die Auflagefläche weiter unterteilen.

Die Standflächen der Standelemente sind gegenüber der Auflagefläche mindestens so weit nach unten versetzt wie die Unterseite der Bodenplatte. Somit steht die Probenkammer, wenn sie beispielsweise auf einer ebenen Fläche steht, auch auf den Standelementen, insbesondere nur auf den Standelementen, wenn die Standflächen weiter nach unten versetzt sind als die Unterseite der Bodenplatte.

Im vorliegenden Fall ist beispielhaft eine Deckplatte gezeigt, bei der die Auflagefläche in einer ersten, im bestimmungsgemäßen Gebrauch horizontal angeordneten, Ebene 19 angeordnet ist und die Befestigungsfläche in einer zweiten, im bestimmungsgemäßen Gebrauch horizontal angeordneten, Ebene 20 angeordnet ist. Die Unterseite der Deckplatte weist zwischen der Auflagefläche und der Befestigungsfläche eine Fläche 21 auf, die in einer dritten, im bestimmungsgemäßen Gebrauch horizontal angeordneten, Ebene 22 angeordnet ist, die gegenüber der Auflagefläche nach oben versetzt angeordnet ist.

Zur Veranschaulichung der Ausführungsform ist in Figur 1k auch ein Probenhalter gezeigt, dessen Auflageplatte im Auflagebereich Unterbrechungen 23 aufweist, die derart ausgebildet und angeordnet sind, dass die Standelemente in den Unterbrechungen aufgenommen sind, wenn die Probenkammer bestimmungsgemäß auf dem Probenhalter aufliegt. Hier erstrecken sich die Unterbrechungen bis zur Unterseite der Auflageplatte, sie sind also als Durchbrüche durch die Auflageplatte ausgebildet. Alternativ können sie auch als Aufnahmen ausgebildet sein, die sich nicht bis zur Unterseite der Auflageplatte erstrecken, also unten geschlossen sind.

Insbesondere können die Standelemente vollständig in den Unterbrechungen aufgenommen sein. Im Fall von Unterbrechungen in Form von Durchbrüchen können die Standelemente sich aber auch durch die Durchbrüche hindurch erstrecken und ihre Standfläche im Vergleich zur Unterseite der Auflageplatte nach unten versetzt sein.

Ein erfindungsgemäßes System umfasst die Probenkammer und den Probenhalter, wie sie in Figuren 1k und 1l gezeigt sind.

In Figur 1m ist eine weitere Abwandlung der ersten Ausführungsform im Querschnitt gezeigt. Die Unterseite der Deckplatte 2 weist eine Auflagefläche 2a-1 und eine Reservoirbodenfläche 2a-4 auf. Hier ist in der Deckplatte 2 der Probenkammer ein Reservoir 5 ausgebildet. Die Deckplatte stellt also mindestens die untere Begrenzung, also den Reservoirboden, und die seitliche Begrenzung des Reservoirs bereit. Die Deckplatte ist, anders als in den obigen Ausführungsformen, im Bereich der Reservoirs nicht nach unten offen. Im Prinzip gelten die obigen Ausführungen analog, wobei in dieser Abwandlung der Reservoirboden nicht durch eine an der Deckplatte befestigte Bodenplatte gebildet wird, die an einer Befestigungsfläche an der Unterseite der Deckplatte befestigt ist. Entsprechend gelten die Erläuterungen zur Ausgestaltung und Anordnung der Befestigungsfläche in dieser Abwandlung für die Reservoirbodenfläche analog.

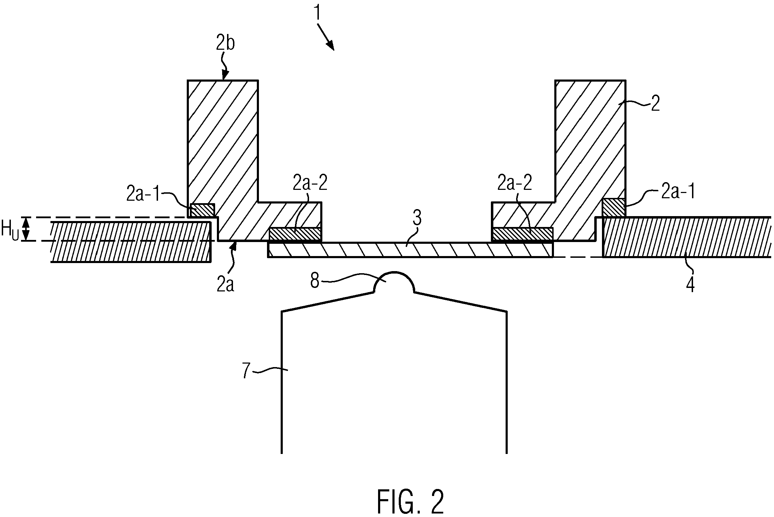

Figur 2 zeigt einen Querschnitt einer Probenkammer 1 gemäß einer zweiten Ausführungsform. Diese ist im Wesentlichen wie die in Figur 1a gezeigte Probenkammer ausgebildet. Allerdings ist hier die Befestigungsfläche bezogen auf die Auflagefläche weniger weit nach unten versetzt als in der ersten Ausführungsform. Die Stufenhöhe Hu ist also geringer als in der in Figur 1a gezeigten Ausführungsform.

Auch hier ist zur Veranschaulichung der bereits in Figur 1a gezeigte Teil eines Probenhalters dargestellt und die Probenkammer in der bestimmungsgemäßen Anordnung auf dem Probenhalter gezeigt. In Figur 2 fluchtet die Unterseite der Bodenplatte mit der Unterseite des Probenhalters, statt wie in Figur 1a gegenüber der Unterseite des Probenhalters nach unten versetzt zu sein. Auch hier ist eine Annäherung der Frontlinse an die Unterseite der Bodenplatte über deren gesamte Breite möglich, ohne dabei Gefahr zu laufen, beim seitlichen Verfahren der Frontlinse an die Auflageplatte des Probenhalters zu stoßen. Bei der in Figur 2 gezeigten Ausführungsform muss die Frontlinse, bei gleicher Annäherung an die Bodenplatte wie in Figur 1a, näher an den Probenhalter angenähert werden. Die Deckplatte ist jedoch in der Mikroskopieöffnung geschützter angeordnet als in dem in Figur 1a gezeigten Beispiel, wo sie vergleichsweise exponiert ist.

Anhand eines Vergleichs der beiden Ausführungsformen kann man erkennen, dass die Stufenhöhe Hu der Unterseite der Deckplatte bei Verwendung einer Bodenplatte mit vorgegebener Dicke und bei gleicher Tiefe T_{M} der Mikroskopieöffnung ausschlaggebend dafür ist, wo im eingebauten Zustand die Unterseite der Bodenplatte relativ zur Unterseite der Auflageplatte des Probenhalters angeordnet ist.

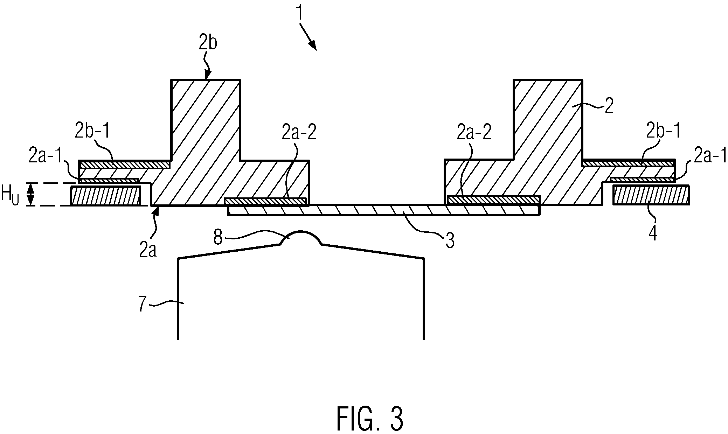

Figur 3 zeigt einen Querschnitt einer Probenkammer 1 gemäß einer dritten Ausführungsform, die eine Abwandlung der ersten und zweiten Ausführungsform ist. Auch hier weist die Unterseite der Deckplatte eine Stufenstruktur auf. Zur Veranschaulichung ist auch in Figur 3 der bereits in Figur 1a gezeigte Teil eines Probenhalters dargestellt und die Probenkammer in der bestimmungsgemäßen Anordnung auf dem Probenhalter gezeigt. Beispielhaft ist hier eine Stufenstruktur der Unterseite mit einer Stufenhöhe Hu gezeigt, die zwischen der Stufenhöhe der ersten und der Stufenhöhe der zweiten Ausführungsform liegt. Andere Stufenhöhen, insbesondere wie in der ersten oder der zweiten Ausführungsform sind jedoch ebenfalls möglich. In Figur 3 fluchtet die Unterseite der Deckplatte mit der Unterseite des Probenhalters, das heißt die Stufenhöhe der Unterseite Hu ist gleich der Tiefe T_{M} der Mikroskopieöffnung. Demnach ist die Unterseite der Bodenplatte gegenüber der Unterseite des Probenhalters nach unten versetzt.

Im Unterschied zu den Ausführungsformen in den Figuren 1 und 2 weist die Oberseite 2b der Deckplatte in der in Figur 3 dargestellten Ausführungsform eine nach unten versetzte Andrückfläche 2b-1 auf, so dass eine Stufenstruktur gebildet wird. Die Stufenstruktur umfasst genauer gesagt eine gegenüber den restlichen Bereichen der Oberseite der Deckplatte um den Abstand H_{O} nach unten versetzte Andrückfläche 2b-1. Die Andrückfläche ist der Auflagefläche 2a-1 gegenüberliegend angeordnet, wobei in diesem Beispiel die Breite der Andrückfläche größer als die Breite der Auflagefläche ist. Die Breite der Andrückfläche kann jedoch auch kleiner als die Breite oder gleich der Breite der Auflagefläche sein. Insbesondere kann die Breite der Andrückfläche gleich der Breite der Auflagefläche sein und die Andrückfläche und die Auflagefläche derart ausgebildet sein, dass sie deckungsgleich sind.

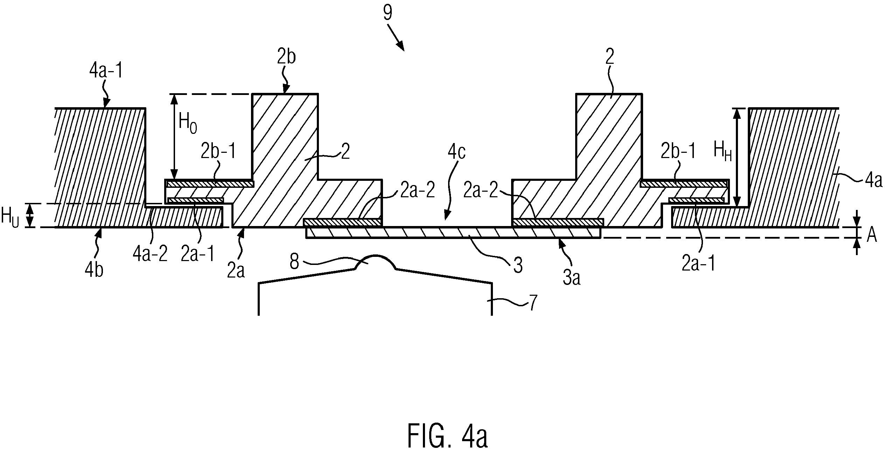

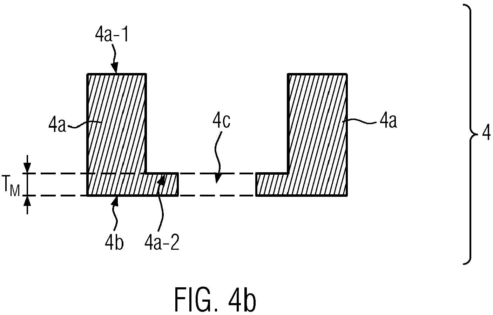

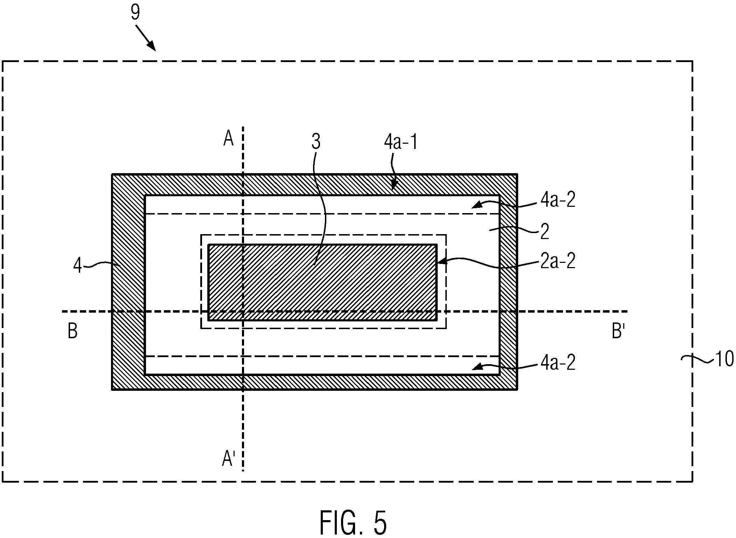

Figuren 4a und 5 zeigen im Querschnitt und in Draufsicht eine Ausführungsform eines Systems 9 umfassend eine Probenkammer 1 und einen Probenhalter 4, der eine Auflageplatte 4a mit einer Mikroskopieöffnung 4c umfasst. In Figur 4b ist zur Veranschaulichung schematisch der Probenhalter ohne eine Probenkammer in einem Querschnitt dargestellt.

Das System kann optional einen Mikroskoptisch 10, der der besseren Übersicht halber nur in Figur 5 dargestellt ist, und/oder ein optisches System, insbesondere ein Objektiv 7 mit Frontlinse 8 umfassen. Der Probenhalter 4 kann ein separates Bauteil sein oder integral mit dem Mikroskoptisch ausgebildet sein.

Die Probenkammer ist in bestimmungsgemäßer Anordnung auf dem Probenhalter dargestellt. Die Probenkammer 1 umfasst auch hier eine Deckplatte 2 und eine an einer Unterseite 2a der Deckplatte befestigte Bodenplatte 3, wobei die Deckplatte und die Bodenplatte derart ausgebildet und angeordnet sind, dass sie zusammen ein Reservoir 5 für die Zellen 6 ausbilden. Bei der Probenkammer kann es sich um eine der oben beschriebenen Probenkammern handeln.

Probenkammer und der Probenhalter sind in dem in Figur 4a dargestellten System derart ausgebildet, dass, bei bestimmungsgemäßer Anordnung der Probenkammer auf dem Probenhalter, die Unterseite 3a der Bodenplatte gegenüber der Unterseite 4b der Auflageplatte nach unten versetzt angeordnet ist. Alternativ kann die Bodenplatte in der Mikroskopieöffnung aufgenommen sein, insbesondere derart, dass die Unterseite der Bodenplatte mit einer Unterseite der Auflageplatte fluchtet, wie es in Figur 2 dargestellt ist.

In dem hier gezeigten Beispiel fluchtet die Unterseite 2a der Deckplatte, genauer, die Befestigungsfläche 2a-2, mit der Unterseite 4b der Auflageplatte. Die Stufenhöhe der Unterseite Hu ist gleich der Tiefe T_{M} der Mikroskopieöffnung. Alternativ kann jedoch auch, wie beispielsweise in den Figuren 1 oder 2 gezeigt, die Stufenhöhe der Unterseite Hu größer oder kleiner als die Tiefe T_{M} der Mikroskopieöffnung sein.

In dieser Ausführungsform weist die Oberseite 4a-1 der Auflageplatte 4a des Probenhalters 4 einen Auflagebereich 4a-2 auf. Der Auflagebereich ist gegenüber anderen Bereichen der Oberseite der Auflageplatte um eine Stufenhöhe H_{H} nach unten versetzt angeordnet, so dass die Oberseite der Auflageplatte eine Stufenstruktur aufweist.

Wie man in Figur 4a erkennt, liegt die Probenkammer bei bestimmungsgemäßer Anordnung auf dem Auflagebereich 4a-2 auf. Hier bildet der Auflagebereich einen Teil des inneren Rands der Oberseite der Auflageplatte, er grenzt also unmittelbar an die Mikroskopieöffnung an. Wie man in der Draufsicht in Figur 5 erkennen kann, besteht der Auflagebereich hier aus zwei Teilflächen, im Folgenden auch als Teilbereiche bezeichnet, die sich jeweils entlang der Längsseite der Mikroskopieöffnung erstrecken. Die Auflagefläche der Deckplatte weist zwei entlang der Längsseite verlaufende Teilflächen auf, die jeweils auf einem der Teilbereiche des Auflagebereichs aufliegen.

In diesem Beispiel ist die Breite des Auflagebereichs größer als die Breite der Auflagefläche. Die Breite des Auflagebereichs kann alternativ gleich der Breite der Auflagefläche sein. Insbesondere können der Auflagebereich und die Auflagefläche derart ausgebildet sein, dass sie die gleiche Form und Größe haben. Sie sind dann bei bestimmungsgemäßer Anordnung der Probenkammer deckungsgleich.

Im hier gezeigten Beispiel ist der Abstand zwischen der Unterseite 4b der Auflageplatte und dem Auflagebereich 4a-2, also die Tiefe der Mikroskopieöffnung T_{M} gleich der Stufenhöhe Hu der Unterseite der Deckplatte. Dadurch fluchten bei bestimmungsgemäß eingebauter Probenkammer die Unterseite der Deckplatte und die Unterseite der Auflageplatte.

Im vorliegenden Fall weist die Oberseite 2b der Deckplatte der Probenkammer eine Andrückfläche 2b-1, die der Auflagefläche 2a-1 gegenüberliegend angeordnet und gegenüber anderen Bereichen der Oberseite nach unten versetzt ist, auf, so dass eine Stufenstruktur ausgebildet wird. Beispielsweise kann es sich um eine Probenkammer handeln, die eine der im Zusammenhang mit Figur 3 beschriebene Andrückfläche aufweist.

Alternativ kann die Oberseite der Deckplatte aber auch ohne eine nach unten versetzte Andrückfläche ausgebildet sein, beispielsweise wie die in Figur 1 oder Figur 2 gezeigte Oberseite.

Figur 6a zeigt einen Querschnitt eines Systems, das eine Probenkammer und einen Probenhalter aufweist, die wie in Figuren 4, 4a und 5 ausgebildet sein können. Alternativ können aber auch eine anders ausgebildete erfindungsgemäße Probenkammer und ein anders ausgebildeter erfindungsgemäßer Probenhalter vorgesehen sein. Die Oberseite der Auflageplatte 4a des Probenhalters weist einen nach unten versetzten Auflagebereich 4a-2 auf, so dass eine Stufenstruktur gebildet wird, wobei der Auflagebereich einen Teil des inneren Rands der Auflageplatte bildet. Beispielsweise kann der Auflagebereich zwei getrennte Teilbereiche umfassen, insbesondere aus zwei getrennten Teilbereichen bestehen, die einander gegenüberliegend und jeweils entlang einer der langen Seiten der Mikroskopieöffnung angeordnet sind.

Die Oberseite 2b der Probenkammer weist eine nach unten versetzte Andrückfläche 2b-1 auf, die der Auflagefläche 2a-1 gegenüberliegend angeordnet ist, so dass eine Stufenstruktur gebildet wird, wobei die Auflagefläche und Andrückfläche jeweils einen Teil des äußeren Rands der Unterseite bzw. Oberseite der Deckplatte bilden. Im eingebauten Zustand der Probenkammer liegt die Auflagefläche 2a-1 auf dem Auflagebereich 4a-2 der Auflageplatte auf.

Das System umfasst weiterhin einen Probenniederhalter 11, der eine Niederhaltestruktur 11a aufweist, hier eine zweiteilige Niederhaltestruktur, die aus zwei Stegen 11a-1 und 11a-2 besteht. Jeder der Stege drückt im eingebauten Zustand auf einen der Teilbereiche der Andrückfläche.

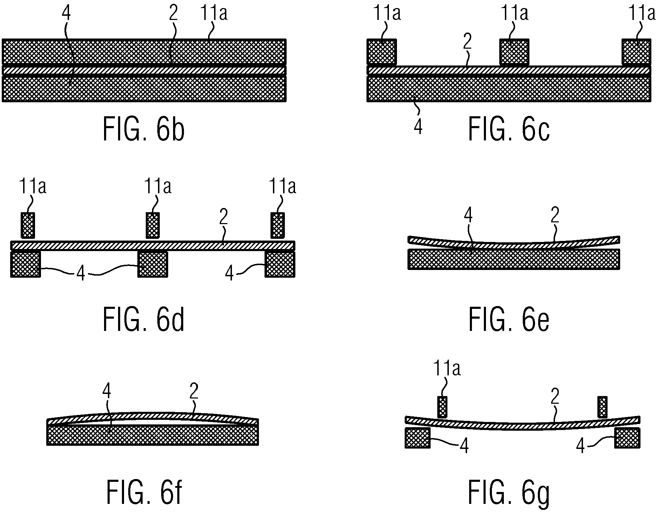

Der Steg kann jeweils durchgehend ausgebildet sein oder Unterbrechungen aufweisen. Das ist vereinfacht in Figuren 6b und 6c in einem Ausschnitt eines Längsschnitts im Bereich des Stegs gezeigt. Eine weitere Alternative ist in Figur 6d gezeigt, wo der Auflagebereich des Probenhalters an jeder der Längsseiten mehrere getrennte Teilbereichen aufweist, denen gegenüber jeweils ein Teilabschnitt der Niederhaltestruktur angeordnet ist, wobei die Andrückfläche und die Auflagefläche der Deckplatte dazwischen angeordnet sind.

In Figuren 6e und 6f ist im Querschnitt je eine verzogene Deckplatte dargestellt, die nicht von einem Probenniederhalter niedergehalten wird. Sie ist hier einmal mit der Mitte und einmal mit den Enden nach oben gebogen. Wenn der Probenniederhalter derart ausgebildet ist, dass er entlang der langen Seite auf die Andrückfläche drückt, kann die Deckplatte in eine ebene Form gebracht werden, wie es in den anderen Figuren gezeigt ist. Dadurch, dass die Andrückfläche der Auflagefläche der Probenkammer und im eingebauten Zustand somit auch dem Auflagebereich der Auflageplatte des Probenhalters gegenüberliegend angeordnet ist, wird die in Figur 6g gezeigte Situation vermieden, in der durch das Andrücken die Deckplatte verkrümmt wird.

In Figur 6a ist das Reservoir beispielhaft von oben abgedeckt, wobei hier eine Abdeckung 12 oben auf der Deckplatte aufliegt. Alternativ kann die Deckplatte selbst derart ausgebildet sein, dass sie das Reservoir abdeckt. Die Abdeckung kann also integral mit der Deckplatte ausgebildet, insbesondere ein Teil der Oberseite der Deckplatte, sein. Alternativ kann, wie in den vorangegangenen Figuren keine Abdeckung vorgesehen sein.

Figuren 7a bis 7c zeigen ein Beispiel eines erfindungsgemäßen Systems 9, das eine rechteckige Probenkammer 1 mit mehreren Reservoiren 5, einer nach unten versetzten und ohne Unterbrechungen umlaufend angeordneten Andrückfläche 2b-1 am äußeren Rand der Oberseite der Deckplatte, einer ohne Unterbrechungen umlaufend angeordneten Auflagefläche 2a-1 am äußeren Rand der Unterseite Deckplatte und einen Probenniederhalter 11 mit zwei durchgehend ausgebildeten Stegen 11 a-1 und 11 a-2, wobei jeder der Stege im eingebauten Zustand auf eine der Andrückflächen entlang der Längsseiten der Deckplatte drückt.

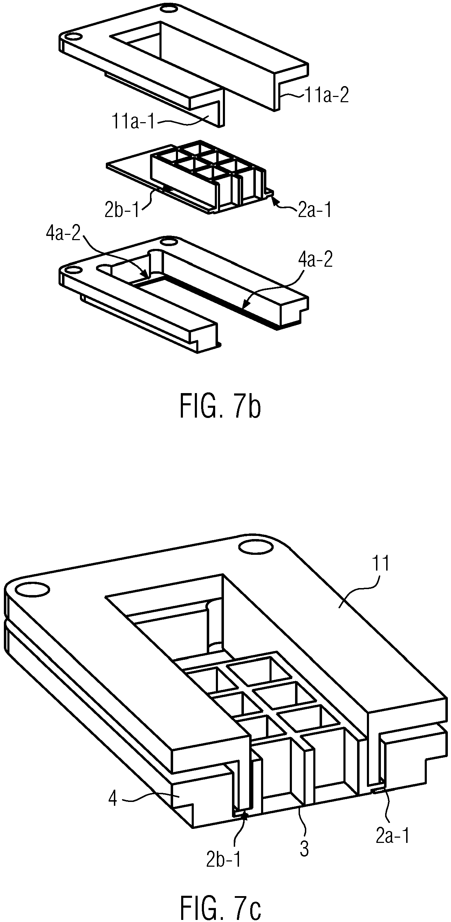

Figur 7a zeigt den Probenhalter, die Probenkammer und den Probenniederhalter in Schrägansicht und vor dem Einlegen der Probenkammer. In Figur 7b ist zur besseren Veranschaulichung nur ein Teil des Systems gezeigt, so dass auch die Querschnittsstruktur erkennbar ist. In Figur 7c ist derselbe Teil des Systems gezeigt, wobei hier die Probenkammer in den Probenhalter eingelegt ist und der Probenniederhalter auf der Probenkammer angeordnet ist.

Der jeweilige Steg kann alternativ (hier nicht gezeigt) in der Längsrichtung mit Unterbrechungen ausgebildet sein. Die Länge der Unterbrechungen kann entsprechend der Form und Eigenschaften der Probenkammer derart gewählt werden, dass kein Aufbiegen der Probenkammer auftritt.

In allen in Figuren 2 bis 7 gezeigten Ausführungsformen kann jeweils statt einer Probenkammer, die eine im Bereich der Reservoirs nach unten offene Deckplatte und eine daran befestigte Bodenplatte, die den Reservoirboden bildet, umfasst, eine Probenkammer verwendet werden, deren Deckplatte einteilig ausgebildet ist, wobei die Unterseite der Deckplatte eine Auflagefläche 2a-1 und eine Reservoirbodenfläche 2a-4 aufweist, beispielsweise wie im Zusammenhang mit Figur 1m beschrieben. Im Prinzip gelten die obigen Ausführungen zu Figuren 2 bis 7 analog, wobei die Ausgestaltung und Anordnung der Befestigungsfläche in dieser Abwandlung für die Reservoirbodenfläche gelten.

Im Folgenden wird mittels einiger Beispiele aufgezeigt, wie die Probenkammer und/oder der Probenhalter konkret ausgebildet sein können.

In einem konkreten Beispiel ist die Deckplatte der Probenkammer in Form eines rechteckigen Mikroskopieträgers ausgebildet. Die Deckplatte, auch als Oberteil bezeichnet, ist in Form eines Spritzgussteils ausgebildet und an ihrer Unterseite ist eine Bodenplatte in Form eines Deckglases befestigt.

Die maximale Länge der Probenkammer, insbesondere Länge ihrer Unterseite, beträgt höchstens, insbesondere weniger als, 76 mm und die maximale Breite der Probenkammer, insbesondere die Breite ihrer Unterseite, beträgt höchstens, insbesondere weniger als, 26 mm. Die Deckglasdicke D_{D} kann beispielsweise 0,17 mm sein. Die Unterseite der Deckplatte weist eine Öffnung auf, die durch die Bodenplatte bedeckt ist. An der Unterseite der Deckplatte ist zentriert die Bodenplatte in Form eines rechteckigen Deckglases mit 73 mm Länge und 23 mm Breite befestigt. Die Stufenstruktur der Unterseite der Deckplatte umfasst eine 2 mm breite Stufe, die einen umlaufenden äußeren Rand der Unterseite der Deckplatte bildet.

In diesem Beispiel ist Stufenhöhe H_{U} = 0,5 mm - D_{D} = 0,5 mm - 0,17 mm = 0,33 mm. Das heißt, die Befestigungsfläche, an der die Deckplatte befestigt ist, ist im Vergleich zur Auflagefläche um 0,33 mm nach unten versetzt. Die Dimensionierung von H_{U} = 0,5 mm - D_{D} ist vorteilhaft, wenn die Auflageplatte eines Probenhalters im Auflagebereich eine Dicke von 0,5 mm hat. Dann fluchtet die Unterseite der Bodenplatte mit der Unterseite der Auflageplatte. Bei dieser Betrachtung wird davon ausgegangen, dass das Zusammenfügen von Spritzgussteil und Deckglas die Gesamtdicke nicht beeinflusst, dass also die Summe der Dicke des Deckglases und der Dicke des Spritzgussteils einzeln gleich der Dicke der aus Deckglas und Spritzgussteil zusammengefügten Struktur ist. Beispielsweise kann das mittels einer Verschweißtechnik, die keinen Abstand zwischen Deckglas und Spritzgussteil hinzufügt, erreicht werden.

Alternativ kann zum Aufbringen des Deckglases ein doppelseitiges Klebeband verwendet werden. Das Klebeband kann beispielsweise eine montierte Dicke von D_{K} = 0,15 mm aufweisen. Dann kann die Stufenhöhe H_{U} = 0,5 mm - D_{D} - D_{K} = 0,5 mm - 0,17 mm - 0,15 mm = 0,18 mm betragen. Die Dimensionierung von H_{U} = 0,5 mm - D_{D} - D_{K} ist vorteilhaft, wenn die Auflageplatte eines Probenhalters im Auflagebereich eine Dicke von 0,5 mm hat. Dann fluchtet die Unterseite der Bodenplatte mit der Unterseite der Auflageplatte.

Als weiteres Beispiel kann die Probenkammer in Form einer Petrischale mit einem maximalen Außendurchmesser von 35 mm ausgebildet sein. Die Deckplatte, also das Oberteil der Petrischale, ist ein kreisförmiges rotationssymmetrisches Spritzgussteil. Die Unterseite der Deckplatte weist eine kreisförmige Öffnung mit einem Durchmesser von 21 mm auf, die mit einer kreisförmigen Bodenplatte in Form eines Deckglases der Dicke 170 µm abgedeckt ist. Die Bodenplatte ist beispielsweise mit einer zwischen10 µm und 100 µm dicken, insbesondere einer 50 µm dicken, Doppelklebefolie an der Deckplatte befestigt. Die Unterseite des Deckglases ist planparallel mit der Unterseite des horizontalen Bodenbereichs der Deckplatte.

Die Unterseite der Deckplatte weist im Bereich der Befestigungsfläche eine Dicke von 1 mm auf und hat auf Höhe der Befestigungsfläche einen Durchmesser von 31 mm. Im Bereich der Auflagefläche weist die Deckplatte eine Dicke von 0,5 mm auf. Die Auflagefläche ist gegenüber der Befestigungsfläche um 0,5 mm nach oben versetzt und die Auflagefläche bildet einen 2 mm breiten äußeren Rand der Unterseite der Deckplatte.

Ein beispielhaftes System kann eine solche Petrischale und einen Probenhalter, beispielsweise aus einer Aluminium-Magnesium-Legierung, umfassen, dessen Auflageplatte an der Oberseite eine vertikale zylinderförmige Aussparung mit einem Durchmesser von 36 mm hat. Die Aussparung endet 0,5 mm über der Unterseite der Auflageplatte, so dass die Auflageplatte in diesem Abschnitt eine Dicke von 0,5 mm aufweist. Die Aussparung ist derart ausgebildet, dass die Auflageplatte einen Auflagebereich in Form einer ebenen und parallel zur Unterseite der Auflageplatte angeordneten Oberfläche aufweist. In dem 0,5 mm dicken Abschnitt der Auflageplatte ist eine Mikroskopieöffnung in Form eines ebenfalls zylinderförmigen Durchbruchs mit einem Durchmesser von 32 mm angeordnet, wobei der Durchbruch und die Aussparung insbesondere konzentrisch angeordnet sind.

Legt man die oben beschriebene Probenkammer in Form der Petrischale in diesen Probenhalter ein, befinden sich die Unterseite des Deckglases und die Unterseite der Auflageplatte in einer Ebene, sie fluchten also.

In einem weiteren Beispiel, kann der Probenhalter die lateralen Außendimensionen einer Multititerplatte, also beispielsweise 128 mm x 86 mm, haben und mehrere, beispielsweise sechs, zylinderförmige Aussparungen mit 36 mm Innendurchmesser aufweisen. In jeder der Aussparungen kann eine zylinderförmige Mikroskopieöffnung mit 35 mm Durchmesser ausgebildet sein, wobei die Auflageplatte unterhalb des Auflagebereichs eine Dicke von 0,5 mm hat, ähnlich wie in dem zuvor beschriebenen Beispiel.

Es versteht sich, dass die oben beschriebenen bzw. in den Figuren dargestellten Merkmale nicht auf diese speziellen Kombinationen beschränkt sind.

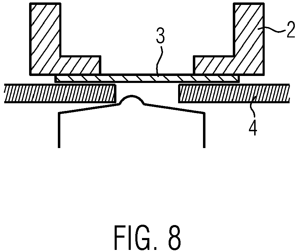

Zum besseren Verständnis ist in Figur 8 ein schematischer, nicht maßstabsgetreuer Querschnitt eines Teils eines aus dem Stand der Technik bekannten Systems gezeigt. Hier ist der Probenhalter gezeigt, auf dem die Bodenplatte, beispielsweise ein Deckglasboden, an der Unterseite einer Deckplatte befestigt ist. Wie man hier erkennt, ist die Unterseite der Bodenplatte oberhalb der Mikroskopieöffnung angeordnet. Figur 8 veranschaulicht die oben beschriebene Kollisionsgefahr des Objektivs mit dem Probenhalter und die zu den Rändern der Probenkammer hin abnehmende Zugänglichkeit.

## Patentansprüche

1. Probenkammer (1) zum Mikroskopieren von Zellen (6) umfassend eine Deckplatte (2), deren Unterseite (2a) eine Auflagefläche (2a-1) aufweist,
wobei in der Deckplatte (2) ein Reservoir (5) für die Zellen (6) mit einem Reservoirboden (5a) ausgebildet ist, und wobei die Unterseite (2a) der Deckplatte (2) eine Reservoirbodenfläche (2a-4) aufweist, die gegenüber der Auflagefläche (2a-1) nach unten versetzt angeordnet ist,
oder
wobei die Probenkammer (1) eine Bodenplatte (3) umfasst, wobei die Deckplatte (2) und die Bodenplatte (3) derart ausgebildet und angeordnet sind, dass sie zusammen ein Reservoir (5) für die Zellen (6) mit einem Reservoirboden (5a) bilden, wobei die Bodenplatte (3) den Reservoirboden (5a) bildet, und
wobei die Unterseite (2a) der Deckplatte (2) eine Befestigungsfläche (2a-2) aufweist, die gegenüber der Auflagefläche (2a-1) nach unten versetzt angeordnet ist und an der die Bodenplatte (3) befestigt ist.

2. Probenkammer (1) nach Anspruch 1,
wobei die Auflagefläche (2a-1) zwischen der Befestigungsfläche (2a-2) und einer äußeren Kante der Unterseite (2a) der Deckplatte (2) angeordnet ist, insbesondere zumindest einen Teil des äußeren Rands der Unterseite (2a) der Deckplatte (2) bildet, oder
wobei die Auflagefläche (2a-1) zwischen der Reservoirbodenfläche (2a-4) und einer äußeren Kante der Unterseite (2a) der Deckplatte (2) angeordnet ist, insbesondere zumindest einen Teil des äußeren Rands der Unterseite (2a) der Deckplatte (2) bildet.

3. Probenkammer (1) nach Anspruch 2,
wobei die Unterseite (2a) der Deckplatte (2) eine durch die Auflagefläche (2a-1) und die Reservoirbodenfläche (2a-4) oder durch die Auflagefläche (2a-1) und die Befestigungsfläche (2a-2) gebildete Stufenstruktur aufweist
und/oder
wobei die Auflagefläche (2a-1) in einer ersten, im bestimmungsgemäßen Gebrauch horizontal angeordneten, Ebene (19) angeordnet ist und die Reservoirbodenfläche (2a-4) oder die Befestigungsfläche (2a-2) in einer zweiten, im bestimmungsgemäßen Gebrauch horizontal angeordneten, Ebene (20) angeordnet ist und
wobei die Unterseite der Deckplatte (2) zwischen der Auflagefläche (2a-1) und der Reservoirbodenfläche (2a-4) oder zwischen der Auflagefläche (2a-1) und der Befestigungsfläche (2a-2) eine Fläche (21) aufweist, die in einer dritten, im bestimmungsgemäßen Gebrauch horizontal angeordneten, Ebene (22) angeordnet ist, die gegenüber der Auflagefläche (2a-1) nach oben versetzt angeordnet ist.

4. Probenkammer (1) nach einem der Ansprüche 1 bis 3, wobei die Auflagefläche (2a-1) in Form einer durchgehenden Fläche ausgebildet ist oder wobei die Auflagefläche (2a-1) mehrere voneinander getrennte Teilflächen aufweist, insbesondere durch Trennelemente (18) getrennte Teilflächen, wobei die Trennelemente (18) jeweils in Form eines Standelements (15), das sich von der Auflagefläche (2a-1) nach unten erstreckt, oder in Form einer Unterbrechung (2a-3) ausgebildet sind.

5. Probenkammer (1) nach Anspruch 4,
wobei die Auflagefläche (2a-1) die voneinander getrennten Teilflächen aufweist und
wobei die Auflagefläche (2a-1) in Form einer um die Befestigungsfläche (2a-2) oder um die Reservoirbodenfläche (2a-4) umlaufend angeordneten Fläche ausgebildet ist, die durch mindestens zwei, insbesondere mindestens drei, Trennelemente (18) in Form von Unterbrechungen (2a-3) und/oder in Form von Standelementen (15) in die getrennten Teilflächen unterteilt ist.

6. Probenkammer (1) nach einem der vorangegangenen Ansprüche, wobei die Auflagefläche (2a-1) eine erste Teilfläche und eine zweite Teilfläche aufweist, die voneinander getrennt und auf entgegengesetzten Seiten der Unterseite (2a) der Deckplatte (2) angeordnet sind, insbesondere wobei die Unterseite (2a) der Deckplatte (2) rechteckig ausgebildet ist und die erste Teilfläche und die zweite Teilfläche jeweils an einer der langen Seiten oder jeweils an einer der kurzen Seiten der Unterseite (2a) der Deckplatte (2) angeordnet sind.

7. Probenkammer (1) nach Anspruch 6, wobei die Auflagefläche (2a-1) eine dritte Teilfläche und/oder eine vierte Teilfläche aufweist, die von der ersten Teilfläche und der zweiten Teilfläche und gegebenenfalls voneinander getrennt angeordnet sind, insbesondere wobei die Unterseite (2a) der Deckplatte (2) rechteckig ausgebildet ist, die erste Teilfläche und die zweite Teilfläche jeweils an einer der langen Seiten und die dritte Teilfläche und/oder die vierte Teilfläche jeweils an einer der kurzen Seiten der Unterseite (2a) der Deckplatte (2) angeordnet sind.

8. Probenkammer (1) nach einem der vorangegangenen Ansprüche, wobei die Auflagefläche (2a-1) aus einer Vielzahl von, insbesondere mindestens drei, Teilflächen besteht, die voneinander getrennt und, insbesondere in gleichmäßigen Abständen, entlang einer Außenseite der Unterseite (2a) der Deckplatte (2) angeordnet sind, insbesondere wobei die Unterseite (2a) der Deckplatte (2) rund ausgebildet ist und die Teilflächen, insbesondere in gleichmäßigen Abständen, entlang eines Umfangs der Unterseite (2a) der Deckplatte (2) angeordnet sind.

9. Probenkammer (1) nach einem der Ansprüche 1 bis 8, wobei die Deckplatte (2) mindestens zwei insbesondere mindestens drei, insbesondere mindestens vier, Standelemente (15) aufweist, die sich von der Auflagefläche (2a-1) nach unten erstrecken, wobei die Standelemente (15) jeweils eine Standfläche (15a) aufweisen, die gegenüber der Auflagefläche (2a-1) nach unten versetzt angeordnet ist, insbesondere gegenüber der Reservoirbodenfläche (2a-4) oder gegenüber der Unterseite (3a) der Bodenplatte (3) nach unten versetzt angeordnet ist.

10. Probenkammer (1) nach Anspruch 9, wobei die Standelemente (15) zu der Befestigungsfläche (2a-2) bzw. der Reservoirbodenfläche (2a-4) beabstandet angeordnet sind.

11. Probenkammer (1) nach einem der vorangegangenen Ansprüche, wobei eine Oberseite (2b) der Deckplatte (2) eine ganz oder teilweise der Auflagefläche (2a-1) gegenüberliegende Andrückfläche (2b-1) aufweist, wobei die Dicke der Deckplatte (2) im Bereich der Andrückfläche (2b-1) kleiner als die maximale Dicke der Deckplatte (2) ist, so dass die Oberseite (2b) der Deckplatte (2) eine Stufenstruktur aufweist, wobei die Andrückfläche (2b-1) insbesondere zumindest einen Teil des äußeren Rands der Oberseite (2b) der Deckplatte (2) bildet.

12. Probenkammer (1) nach Anspruch 11, wobei die Andrückfläche (2b-1) in Form einer durchgehenden Fläche ausgebildet ist oder wobei die Andrückfläche (2b-1) mehrere voneinander getrennte Teilflächen aufweist, insbesondere wobei die Andrückfläche (2b-1) in Form einer um die Oberseite (2b) der Deckplatte (2) umlaufend angeordneten Fläche ausgebildet ist, die durch mindestens zwei, insbesondere mindestens drei, Unterbrechungen in die getrennten Teilflächen unterteilt ist.

13. Probenkammer (1) nach Anspruch 11 oder 12, wobei die Andrückfläche (2b-1) eine erste Teilfläche und eine zweite Teilfläche aufweist, die voneinander getrennt und auf entgegengesetzten Seiten der Oberseite (2b) der Deckplatte (2) angeordnet sind, insbesondere wobei die Oberseite (2b) der Deckplatte (2) rechteckig ausgebildet ist und die erste Teilfläche und die zweite Teilfläche jeweils an einer der langen Seiten oder jeweils an einer der kurzen Seiten der Oberseite (2b) der Deckplatte (2) angeordnet sind.

14. Probenkammer (1) nach Anspruch 13, wobei die Andrückfläche (2b-1) eine dritte Teilfläche und/oder eine vierte Teilfläche aufweist, die von der ersten Teilfläche und der zweiten Teilfläche und gegebenenfalls voneinander getrennt angeordnet sind, insbesondere wobei die Oberseite (2b) der Deckplatte (2) rechteckig ausgebildet ist, die erste Teilfläche und die zweite Teilfläche jeweils an einer der langen Seiten und die dritte Teilfläche und/oder die vierte Teilfläche jeweils an einer der kurzen Seiten der Oberseite (2b) der Deckplatte (2) angeordnet sind.

15. Probenkammer (1) nach einem der Ansprüche 11 bis 14, wobei die Andrückfläche (2b-1) aus einer Vielzahl von, insbesondere mindestens drei, Teilflächen besteht, die voneinander getrennt und, insbesondere in gleichmäßigen Abständen, entlang einer Außenseite der Oberseite (2b) der Deckplatte (2) angeordnet sind, insbesondere wobei die Oberseite (2b) der Deckplatte (2) rund ausgebildet ist und die Teilflächen, insbesondere in gleichmäßigen Abständen, entlang eines Umfangs der Oberseite (2b) der Deckplatte (2) angeordnet sind.

16. System (9) umfassend einen Probenhalter (4), der eine Auflageplatte (4a) mit einer Mikroskopieöffnung (4c) umfasst, und eine Probenkammer (1) zum Mikroskopieren von Zellen (6), insbesondere eine Probenkammer (1) nach einem der Ansprüche 1 bis 15,
wobei die Probenkammer (1) eine Deckplatte (2) umfasst, deren Unterseite (2a) eine Auflagefläche (2a-1) aufweist,
wobei in der Deckplatte (2) ein Reservoir (5) für die Zellen (6) mit einem Reservoirboden (5a) ausgebildet ist, und wobei die Unterseite (2a) der Deckplatte (2) eine Reservoirbodenfläche (2a-4) aufweist, und
wobei die Probenkammer (1) und der Probenhalter (4) derart ausgebildet sind, dass, bei bestimmungsgemäßer Anordnung der Probenkammer (1) auf dem Probenhalter (4), die Reservoirbodenfläche (2a-4) gegenüber der Unterseite (4b) der Auflageplatte (4a) nach unten versetzt angeordnet ist oder die Reservoirbodenfläche (2a-4) in der Mikroskopieöffnung (4c) aufgenommen ist,
oder
wobei die Probenkammer (1) eine Bodenplatte (3) umfasst, wobei die Deckplatte (2) und die Bodenplatte (3) derart ausgebildet und angeordnet sind, dass sie zusammen ein Reservoir (5) für die Zellen (6) mit einem Reservoirboden (5a) bilden, wobei die Bodenplatte (3) den Reservoirboden (5a) bildet und wobei die Unterseite (2a) der Deckplatte (2) eine Befestigungsfläche (2a-2) aufweist, an der die Bodenplatte (3) befestigt ist, und
wobei die Probenkammer (1) und der Probenhalter (4) derart ausgebildet sind, dass, bei bestimmungsgemäßer Anordnung der Probenkammer (1) auf dem Probenhalter (4), die Unterseite (3a) der Bodenplatte (3) gegenüber der Unterseite (4b) der Auflageplatte (4a) nach unten versetzt angeordnet ist oder die Bodenplatte (3) in der Mikroskopieöffnung (4c) aufgenommen ist.

17. System (9) nach Anspruch 16, wobei eine Oberseite (4a-1) der Auflageplatte (4a) einen gegenüber anderen Bereichen der Oberseite (4a-1) der Auflageplatte (4a) nach unten versetzten Auflagebereich (4a-2) aufweist, auf dem die Probenkammer (1), bei bestimmungsgemäßer Anordnung der Probenkammer (1) auf dem Probenhalter (4), aufliegt, so dass die Oberseite (4a-1) der Auflageplatte (4a) eine Stufenstruktur aufweist, wobei der Auflagebereich (4a-2) insbesondere zumindest einen Teil eines inneren Rands der Oberseite (4a-1) der Auflageplatte (4a) bildet.

18. System (9) nach Anspruch 17, wobei der Auflagebereich (4a-2) in Form einer durchgehenden Fläche ausgebildet ist.

19. System (9) nach Anspruch 17, wobei der Auflagebereich (4a-2) mehrere durch Unterbrechungen (23) voneinander getrennte Teilflächen aufweist, insbesondere wobei der Auflagebereich (4a-2) in Form einer um die Mikroskopieöffnung (4c) umlaufend angeordneten Fläche ausgebildet ist, die durch mindestens zwei, insbesondere mindestens drei, insbesondere mindestens vier, Unterbrechungen (23) in die getrennten Teilflächen unterteilt ist.

20. System (9) nach einem der Ansprüche 16 bis 19,
wobei die Deckplatte (2) mindestens zwei insbesondere mindestens drei, insbesondere mindestens vier, Standelemente (15) aufweist, die sich von der Auflagefläche (2a-1) nach unten erstrecken, wobei die Standelemente (15) jeweils eine Standfläche (15a) aufweisen, die gegenüber der Auflagefläche (2a-1) nach unten versetzt angeordnet ist, insbesondere gegenüber der Reservoirbodenfläche (2a-4) oder gegenüber der Unterseite (3a) der Bodenplatte (3) nach unten versetzt angeordnet ist, und
wobei der Auflagebereich (4a-2) Öffnungen (16) und/oder Unterbrechungen (23) aufweist, die derart ausgebildet und angeordnet sind, dass die Standelemente (15) in den Öffnungen (16) und/oder Unterbrechungen (23) aufgenommen sind, wenn die Probenkammer (2) bestimmungsgemäß auf dem Probenhalter (4) aufliegt.

21. System (9) nach einem der Ansprüche 16 bis 20 umfassend die Probenkammer (1) gemäß einem der Ansprüche 11 bis 15 und einen Probenniederhalter (11), wobei der Probenniederhalter (11) derart ausgebildet ist, dass er die Probenkammer (1), insbesondere die Deckplatte (2), im eingebauten Zustand auf die Auflageplatte (4a), insbesondere auf den Auflagebereich (4a-2) drückt, wobei der Probenniederhalter (11) eine Niederhaltestruktur (11a), beispielsweise umfassend mindestens einen Steg (11a-1, 11a-2), umfasst, die auf die Andrückfläche (2b-1) der Oberseite (2b) der Deckplatte (2) drückt.

## Geänderte Patentansprüche

### Geänderte Patentansprüche gemäss Regel 137(2) EPÜ.

1. Probenkammer (1) zum Mikroskopieren von Zellen (6) umfassend eine Deckplatte (2), deren Unterseite (2a) eine Auflagefläche (2a-1) aufweist,
wobei in der Deckplatte (2) ein Reservoir (5) für die Zellen (6) mit einem Reservoirboden (5a) ausgebildet ist, und wobei die Unterseite (2a) der Deckplatte (2) eine Reservoirbodenfläche (2a-4) aufweist, die gegenüber der Auflagefläche (2a-1) nach unten versetzt angeordnet ist,
oder
wobei die Probenkammer (1) eine Bodenplatte (3) umfasst, wobei die Deckplatte (2) und die Bodenplatte (3) derart ausgebildet und angeordnet sind, dass sie zusammen ein Reservoir (5) für die Zellen (6) mit einem Reservoirboden (5a) bilden, wobei die Bodenplatte (3) den Reservoirboden (5a) bildet, und
wobei die Unterseite (2a) der Deckplatte (2) eine Befestigungsfläche (2a-2) aufweist, die gegenüber der Auflagefläche (2a-1) nach unten versetzt angeordnet ist und an der die Bodenplatte (3) befestigt ist,
wobei die Probenkammer (1) in Form eines Trägers im Objektträgerformat mit Aufbauten oder in Form einer Multititerplatte ausgebildet ist.

2. Probenkammer (1) nach Anspruch 1,
wobei die Auflagefläche (2a-1) zwischen der Befestigungsfläche (2a-2) und einer äußeren Kante der Unterseite (2a) der Deckplatte (2) angeordnet ist, insbesondere zumindest einen Teil des äußeren Rands der Unterseite (2a) der Deckplatte (2) bildet, oder
wobei die Auflagefläche (2a-1) zwischen der Reservoirbodenfläche (2a-4) und einer äußeren Kante der Unterseite (2a) der Deckplatte (2) angeordnet ist, insbesondere zumindest einen Teil des äußeren Rands der Unterseite (2a) der Deckplatte (2) bildet.

3. Probenkammer (1) nach Anspruch 2,
wobei die Unterseite (2a) der Deckplatte (2) eine durch die Auflagefläche (2a-1) und die Reservoirbodenfläche (2a-4) oder durch die Auflagefläche (2a-1) und die Befestigungsfläche (2a-2) gebildete Stufenstruktur aufweist
und/oder
wobei die Auflagefläche (2a-1) in einer ersten, im bestimmungsgemäßen Gebrauch horizontal angeordneten, Ebene (19) angeordnet ist und die Reservoirbodenfläche (2a-4) oder die Befestigungsfläche (2a-2) in einer zweiten, im bestimmungsgemäßen Gebrauch horizontal angeordneten, Ebene (20) angeordnet ist und
wobei die Unterseite der Deckplatte (2) zwischen der Auflagefläche (2a-1) und der Reservoirbodenfläche (2a-4) oder zwischen der Auflagefläche (2a-1) und der Befestigungsfläche (2a-2) eine Fläche (21) aufweist, die in einer dritten, im bestimmungsgemäßen Gebrauch horizontal angeordneten, Ebene (22) angeordnet ist, die gegenüber der Auflagefläche (2a-1) nach oben versetzt angeordnet ist.

4. Probenkammer (1) nach einem der Ansprüche 1 bis 3, wobei die Auflagefläche (2a-1) in Form einer durchgehenden Fläche ausgebildet ist oder wobei die Auflagefläche (2a-1) mehrere voneinander getrennte Teilflächen aufweist, insbesondere durch Trennelemente (18) getrennte Teilflächen, wobei die Trennelemente (18) jeweils in Form eines Standelements (15), das sich von der Auflagefläche (2a-1) nach unten erstreckt, oder in Form einer Unterbrechung (2a-3) ausgebildet sind.

5. Probenkammer (1) nach Anspruch 4,
wobei die Auflagefläche (2a-1) die voneinander getrennten Teilflächen aufweist und
wobei die Auflagefläche (2a-1) in Form einer um die Befestigungsfläche (2a-2) oder um die Reservoirbodenfläche (2a-4) umlaufend angeordneten Fläche ausgebildet ist, die durch mindestens zwei, insbesondere mindestens drei, Trennelemente (18) in Form von Unterbrechungen (2a-3) und/oder in Form von Standelementen (15) in die getrennten Teilflächen unterteilt ist.

6. Probenkammer (1) nach einem der vorangegangenen Ansprüche, wobei die Auflagefläche (2a-1) eine erste Teilfläche und eine zweite Teilfläche aufweist, die voneinander getrennt und auf entgegengesetzten Seiten der Unterseite (2a) der Deckplatte (2) angeordnet sind, insbesondere wobei die Unterseite (2a) der Deckplatte (2) rechteckig ausgebildet ist und die erste Teilfläche und die zweite Teilfläche jeweils an einer der langen Seiten oder jeweils an einer der kurzen Seiten der Unterseite (2a) der Deckplatte (2) angeordnet sind.

7. Probenkammer (1) nach Anspruch 6, wobei die Auflagefläche (2a-1) eine dritte Teilfläche und/oder eine vierte Teilfläche aufweist, die von der ersten Teilfläche und der zweiten Teilfläche und gegebenenfalls voneinander getrennt angeordnet sind, insbesondere wobei die Unterseite (2a) der Deckplatte (2) rechteckig ausgebildet ist, die erste Teilfläche und die zweite Teilfläche jeweils an einer der langen Seiten und die dritte Teilfläche und/oder die vierte Teilfläche jeweils an einer der kurzen Seiten der Unterseite (2a) der Deckplatte (2) angeordnet sind.

8. Probenkammer (1) nach einem der vorangegangenen Ansprüche, wobei die Auflagefläche (2a-1) aus einer Vielzahl von, insbesondere mindestens drei, Teilflächen besteht, die voneinander getrennt und, insbesondere in gleichmäßigen Abständen, entlang einer Außenseite der Unterseite (2a) der Deckplatte (2) angeordnet sind, insbesondere wobei die Unterseite (2a) der Deckplatte (2) rund ausgebildet ist und die Teilflächen, insbesondere in gleichmäßigen Abständen, entlang eines Umfangs der Unterseite (2a) der Deckplatte (2) angeordnet sind.

9. Probenkammer (1) nach einem der Ansprüche 1 bis 8, wobei die Deckplatte (2) mindestens zwei insbesondere mindestens drei, insbesondere mindestens vier, Standelemente (15) aufweist, die sich von der Auflagefläche (2a-1) nach unten erstrecken, wobei die Standelemente (15) jeweils eine Standfläche (15a) aufweisen, die gegenüber der Auflagefläche (2a-1) nach unten versetzt angeordnet ist, insbesondere gegenüber der Reservoirbodenfläche (2a-4) oder gegenüber der Unterseite (3a) der Bodenplatte (3) nach unten versetzt angeordnet ist.

10. Probenkammer (1) nach Anspruch 9, wobei die Standelemente (15) zu der Befestigungsfläche (2a-2) bzw. der Reservoirbodenfläche (2a-4) beabstandet angeordnet sind.

11. Probenkammer (1) nach einem der vorangegangenen Ansprüche, wobei eine Oberseite (2b) der Deckplatte (2) eine ganz oder teilweise der Auflagefläche (2a-1) gegenüberliegende Andrückfläche (2b-1) aufweist, wobei die Dicke der Deckplatte (2) im Bereich der Andrückfläche (2b-1) kleiner als die maximale Dicke der Deckplatte (2) ist, so dass die Oberseite (2b) der Deckplatte (2) eine Stufenstruktur aufweist, wobei die Andrückfläche (2b-1) insbesondere zumindest einen Teil des äußeren Rands der Oberseite (2b) der Deckplatte (2) bildet.

12. Probenkammer (1) nach Anspruch 11, wobei die Andrückfläche (2b-1) in Form einer durchgehenden Fläche ausgebildet ist oder wobei die Andrückfläche (2b-1) mehrere voneinander getrennte Teilflächen aufweist, insbesondere wobei die Andrückfläche (2b-1) in Form einer um die Oberseite (2b) der Deckplatte (2) umlaufend angeordneten Fläche ausgebildet ist, die durch mindestens zwei, insbesondere mindestens drei, Unterbrechungen in die getrennten Teilflächen unterteilt ist.

13. Probenkammer (1) nach Anspruch 11 oder 12, wobei die Andrückfläche (2b-1) eine erste Teilfläche und eine zweite Teilfläche aufweist, die voneinander getrennt und auf entgegengesetzten Seiten der Oberseite (2b) der Deckplatte (2) angeordnet sind, insbesondere wobei die Oberseite (2b) der Deckplatte (2) rechteckig ausgebildet ist und die erste Teilfläche und die zweite Teilfläche jeweils an einer der langen Seiten oder jeweils an einer der kurzen Seiten der Oberseite (2b) der Deckplatte (2) angeordnet sind.

14. Probenkammer (1) nach Anspruch 13, wobei die Andrückfläche (2b-1) eine dritte Teilfläche und/oder eine vierte Teilfläche aufweist, die von der ersten Teilfläche und der zweiten Teilfläche und gegebenenfalls voneinander getrennt angeordnet sind, insbesondere wobei die Oberseite (2b) der Deckplatte (2) rechteckig ausgebildet ist, die erste Teilfläche und die zweite Teilfläche jeweils an einer der langen Seiten und die dritte Teilfläche und/oder die vierte Teilfläche jeweils an einer der kurzen Seiten der Oberseite (2b) der Deckplatte (2) angeordnet sind.

15. Probenkammer (1) nach einem der Ansprüche 11 bis 14, wobei die Andrückfläche (2b-1) aus einer Vielzahl von, insbesondere mindestens drei, Teilflächen besteht, die voneinander getrennt und, insbesondere in gleichmäßigen Abständen, entlang einer Außenseite der Oberseite (2b) der Deckplatte (2) angeordnet sind, insbesondere wobei die Oberseite (2b) der Deckplatte (2) rund ausgebildet ist und die Teilflächen, insbesondere in gleichmäßigen Abständen, entlang eines Umfangs der Oberseite (2b) der Deckplatte (2) angeordnet sind.

16. System (9) umfassend einen Probenhalter (4), der eine Auflageplatte (4a) mit einer Mikroskopieöffnung (4c) umfasst, und eine Probenkammer (1) zum Mikroskopieren von Zellen (6), insbesondere eine Probenkammer (1) nach einem der Ansprüche 1 bis 15,
wobei die Probenkammer (1) eine Deckplatte (2) umfasst, deren Unterseite (2a) eine Auflagefläche (2a-1) aufweist,
wobei in der Deckplatte (2) ein Reservoir (5) für die Zellen (6) mit einem Reservoirboden (5a) ausgebildet ist, und wobei die Unterseite (2a) der Deckplatte (2) eine Reservoirbodenfläche (2a-4) aufweist, und
wobei die Probenkammer (1) und der Probenhalter (4) derart ausgebildet sind, dass, bei bestimmungsgemäßer Anordnung der Probenkammer (1) auf dem Probenhalter (4), die Reservoirbodenfläche (2a-4) gegenüber der Unterseite (4b) der Auflageplatte (4a) nach unten versetzt angeordnet ist oder die Reservoirbodenfläche (2a-4) in der Mikroskopieöffnung (4c) aufgenommen ist,
oder
wobei die Probenkammer (1) eine Bodenplatte (3) umfasst, wobei die Deckplatte (2) und die Bodenplatte (3) derart ausgebildet und angeordnet sind, dass sie zusammen ein Reservoir (5) für die Zellen (6) mit einem Reservoirboden (5a) bilden, wobei die Bodenplatte (3) den Reservoirboden (5a) bildet und wobei die Unterseite (2a) der Deckplatte (2) eine Befestigungsfläche (2a-2) aufweist, an der die Bodenplatte (3) befestigt ist, und
wobei die Probenkammer (1) und der Probenhalter (4) derart ausgebildet sind, dass, bei bestimmungsgemäßer Anordnung der Probenkammer (1) auf dem Probenhalter (4), die Unterseite (3a) der Bodenplatte (3) gegenüber der Unterseite (4b) der Auflageplatte (4a) nach unten versetzt angeordnet ist oder die Bodenplatte (3) in der Mikroskopieöffnung (4c) aufgenommen ist.

17. System (9) nach Anspruch 16, wobei eine Oberseite (4a-1) der Auflageplatte (4a) einen gegenüber anderen Bereichen der Oberseite (4a-1) der Auflageplatte (4a) nach unten versetzten Auflagebereich (4a-2) aufweist, auf dem die Probenkammer (1), bei bestimmungsgemäßer Anordnung der Probenkammer (1) auf dem Probenhalter (4), aufliegt, so dass die Oberseite (4a-1) der Auflageplatte (4a) eine Stufenstruktur aufweist, wobei der Auflagebereich (4a-2) insbesondere zumindest einen Teil eines inneren Rands der Oberseite (4a-1) der Auflageplatte (4a) bildet.

18. System (9) nach Anspruch 17, wobei der Auflagebereich (4a-2) in Form einer durchgehenden Fläche ausgebildet ist.

19. System (9) nach Anspruch 17, wobei der Auflagebereich (4a-2) mehrere durch Unterbrechungen (23) voneinander getrennte Teilflächen aufweist, insbesondere wobei der Auflagebereich (4a-2) in Form einer um die Mikroskopieöffnung (4c) umlaufend angeordneten Fläche ausgebildet ist, die durch mindestens zwei, insbesondere mindestens drei, insbesondere mindestens vier, Unterbrechungen (23) in die getrennten Teilflächen unterteilt ist.

20. System (9) nach einem der Ansprüche 16 bis 19,
wobei die Deckplatte (2) mindestens zwei insbesondere mindestens drei, insbesondere mindestens vier, Standelemente (15) aufweist, die sich von der Auflagefläche (2a-1) nach unten erstrecken, wobei die Standelemente (15) jeweils eine Standfläche (15a) aufweisen, die gegenüber der Auflagefläche (2a-1) nach unten versetzt angeordnet ist, insbesondere gegenüber der Reservoirbodenfläche (2a-4) oder gegenüber der Unterseite (3a) der Bodenplatte (3) nach unten versetzt angeordnet ist, und
wobei der Auflagebereich (4a-2) Öffnungen (16) und/oder Unterbrechungen (23) aufweist, die derart ausgebildet und angeordnet sind, dass die Standelemente (15) in den Öffnungen (16) und/oder Unterbrechungen (23) aufgenommen sind, wenn die Probenkammer (2) bestimmungsgemäß auf dem Probenhalter (4) aufliegt.

21. System (9) nach einem der Ansprüche 16 bis 20 umfassend die Probenkammer (1) gemäß einem der Ansprüche 11 bis 15 und einen Probenniederhalter (11), wobei der Probenniederhalter (11) derart ausgebildet ist, dass er die Probenkammer (1), insbesondere die Deckplatte (2), im eingebauten Zustand auf die Auflageplatte (4a), insbesondere auf den Auflagebereich (4a-2) drückt, wobei der Probenniederhalter (11) eine Niederhaltestruktur (11a), beispielsweise umfassend mindestens einen Steg (11a-1, 11a-2), umfasst, die auf die Andrückfläche (2b-1) der Oberseite (2b) der Deckplatte (2) drückt.
